# EUROPÄISCHE PATENTSCHRIFT

(11) **EP 0 702 836 B1**
(45) Veröffentlichungstag und Bekanntmachung des Hinweises auf die Patenterteilung: **16.09.1998**
(21) Anmeldenummer: 94916149.1
(22) Anmeldetag: 01.06.1994
(51) Int. Cl.: G21C 9/016

(54) **VERSCHLUSSEINRICHTUNG ZUM INGANGSETZEN DER KÜHLUNG FÜR EINE KERNSCHMELZE**
CLOSING DEVICE FOR INITIATING COOLING FOR A CORE MELT
SYSTEME DE FERMETURE PERMETTANT LE LANCEMENT DU PROCESSUS DE REFROIDISSEMENT DE LA MATIERE EN FUSION DU COEUR D'UN REACTEUR

(30) Priorität: 08.06.1993 DE 4319092; 02.11.1993 DE 4337367
(43) Veröffentlichungstag der Anmeldung: 27.03.1996
(73) Patentinhaber: SIEMENS AKTIENGESELLSCHAFT, 80333 München (DE)
(72) Erfinder: HAU, Gerhard, D-72461 Albstadt (DE); WISTUBA, Lothar, D-91074 Herzogenaurach (DE); HOLLMANN, Josef, D-96132 Schlüsselfeld (DE)
(86) Internationale Anmeldenummer: DE9400619
(87) Internationale Veröffentlichungsnummer: WO9429877

(56) Entgegenhaltungen:
- EP-A- 0 390 486
- EP-A- 0 419 159
- FR-A- 1 013 130
- FR-A- 2 135 574
- GB-A- 2 115 905
- US-A- 2 723 722
- DATABASE WPI Week 8521, Derwent Publications Ltd., London, GB; AN 85-126744 & JP,A,60 066 800 (MATSUSHITA) 16. April 1985

## Beschreibung

Die Erfindung betrifft eine temperaturabhängig öffnende Verschlußeinrichtung an einer Verbindungsleitung für Kühlfluid, zum Ingangsetzen der Kühlung für eine Kernschmelze in einer Kernreaktoranlage,
wobei die Verbindungsleitung auslaßseitig in einen Auffangraum für die Kernschmelze ragt und einlaßseitig an ein Kühlfluidreservoir, insbesondere ein Kühlwasserreservoir, angeschlossen ist,
mit einem am auslaßseitigen Ende der Verbindungsleitung angeordneten Verschlußorgan, welches das auslaßseitige Ende normalerweise dichtend verschließt und welches ein temperaturabhängiges Öffnungselement hat, das bei Hitzeeinwirkung der Kernschmelze die Freigabe zumindest eines Teils des Auslaßquerschnitts der Verbindungsleitung auslöst, so daß das Kühlfluid aus dem Kühlfluidreservoir über die Verbindungsleitung in den Auffangraum geleitet wird.

In der DE-OS 40 41 295 (siehe insbesondere Figur 2) ist eine Kernrückhaltevorrichtung (auch als Core Catcher bezeichnet) für eine Kernreaktoranlage beschrieben, der nach dem Tiegel-Konzept arbeitet. Das heißt im sehr unwahrscheinlichen Fall des Auftretens einer Kernschmelze wird diese in einem unterhalb des Kernreaktordruckbehälters angeordneten Tiegel aus Stahl aufgefangen, der an seiner Unterseite und an seinen Flanken wassergekühlt ist. Der Tiegel ist vorzugsweise an seiner Innenseite mit einem Schutzmantel aus hochtemperaturbeständigen Metalloxiden (z.B. MgO, UO₂ oder ThO₂) ausgekleidet. Als zweite Schutzschicht für den Tiegel folgt auf den Schutzmantel ein Opfermaterial-Depot, welches insbesondere als ein Mauerwerk aus Abschirmbetonsteinen ausgebildet ist. Der Tiegel oder Auffangbehälter ist in der oberen Hälfte seiner Mantelwandpartie von wenigstens einem Schmelzkühlrohr durchdrungen, das an seinem inneren (auslaßseitigen) Ende mittels eines Schmelzstopfens abgedichtet und einlaufseitig an einen Kühlflüssigkeitsspeicher angeschlossen ist, so daß bei im Auffangbehälter vorhandener Kernschmelze der Schmelzstopfen auf seine Schmelztemperatur aufgeheizt und zum Schmelzen gebracht wird, wodurch ein Strömungsweg für die Kühlflüssigkeit zur Oberfläche der Kernschmelze freigegeben wird. Damit der Schmelzstopfen aufschmilzt, muß er trocken gehalten werden, d.h. das Kühlwasser darf während des Aufschmelzvorgangs den Schmelzstopfen möglichst noch nicht erreicht haben.

In dem EP-A-0 419 159 ist eine Vorrichtung zur Kühlung von Kernschmelze mit einem Wasservorrat und einer Rohrleitung, welche den Wasservorrat mit dem Inneren einer Reaktorkaverne verbindet, beschrieben. Die Zuleitung ist bei einem normalen Betrieb des Reaktors durch einen Stopfen aus einem schmelzbaren Metall verschlossen oder durch eine Platte mit einem Dichtungsring abgedichtet, wobei die Platte mit einem Flansch der Zuleitung durch einen Bolzen aus einem schmelzbaren Metall fest verbunden ist. Unter einem schmelzbaren Metall wird in dem Patent ausschließlich ein Metall verstanden, welches einen Schmelztemperatur unterhalb 400 °C aufweist. Als Beispiel für ein solches Metall wird auf ein Lötmetall verwiesen, dessen Schmelzpunkt entsprechend niedrig ist. Um das schmelzbare Metall vor Korrosion zu schützen, ist in dem Patent angegeben, das schmelzbare Metall mit einer Plastikkappe zu überziehen, die bei einer geringeren Temperatur als der Schmelztemperatur des schmelzbaren Metalls schmilzt und ein Öffnen der Vorrichtung zur Kühlung nicht behindert. Weiterhin besteht bei den in dem Patent erwähnten schmelzbaren Metallen die Möglichkeit, daß diese unter Hitzeeinwirkung giftige Komponenten, beispielsweise Blei, abgeben. Inwieweit ein solches schmelzbares Metall einen sicheren Verschluß der Vorrichtung über einen längeren Zeitraum hinweg unter Einwirkung einer erhöhten Temperatur sowie ggf. von radioaktiver Strahlung gewährleistet, ist dem Patent nicht entnehmbar. Der Erfindung liegt die Aufgabe zugrunde, eine inhärent sicher ansprechende, temperaturabhängig öffnende Verschlußeinrichtung anzugeben, die insbesondere unter den normalen Betriebsbedingungen eines Kernreaktors langzeitbeständig verschlossen bleibt und bei Einwirkung einer Schmelzhitze zuverlässig öffnet. Das soll auch dann geschehen, wenn Kühlfluid im allgemeinen und Kühlwasser im besonderen sich bis zu einem auslaßseitigen Ende der Verbindungsleitung erstrecken, d.h. dieses Ende einer Kühlwirkung aussetzen. Die Erfindung soll bevorzugt bei Kernrückhaltevorrichtungen anwendbar sein, die nach dem Ausbreitungskonzept arbeiten; sie soll aber auch universell bei anderen Arten von Kernrückhalteeinrichtungen, z.B. solchen, die nach dem Tiegelkonzept arbeiten, anwendbar sein.

Die Aufgabe wird gemäß einer ersten Ausführungsform der Erfindung (Anspruch 1) daruch gelost, daß das Verschlußorgan als Öffnungselement einen Kunststoffklotz oder eine aufschmelzbare Kunststoffplatte oder ein aufschmelzbares, an seinem freien Ende verschlossenes Kunststoffrohr aufweist, die weitgehend korrosionsbeständig und normalerweise thermisch isolierend gegenüber dem Kühlfluid sind.

Vorteilhafte Weiterbildungen sind in den Unteransprüchen 2 bis 8 angegeben.

Mit der ersten Ausführungsform der Verschlußeinrichtung nach der Erfindung wird der Vorteil erzielt, daß ihre Funktionsweise durch das Kühlmedium, insbesondere Kühlwasser, nicht beeinträchtigt werden kann. Das Kühlmedium kann die Innenseite der Verschlußeinrichtung benetzen und gehört - im Falle eines EPR (= European Pressurized Water Reactor) - zum IRWST (= In-Containment-Refueling Water Storage Tank), es kann also bis zum auslaßseitigen Ende der Verbindungsleitung anstehen, und wenn sich im sehr unwahrscheinlichen Störfall die Kernschmelze in den Auffangraum ergießt (die Schmelzenhöhe ist zunächst klein), so schmilzt z.B. ein Dichtungselement des Verschlußorgans aufgrund der Hitzeeinwirkung auf, und das Wasser aus der Verbindungsleitung steht sofort zur Bedeckung der Oberfläche der Kernschmelze zur Verfügung. Die Korrosionsbeständigkeit des Öffnungselementes trägt weiterhin dazu bei, daß eine Fehlöffnung des Verschlußorgans auch über einen langen Zeitraum vermieden ist. Das Öffnungselement sowie das Verschlußorgan können vorzugsweise langzeit strahlungsresistant ausgeführt sein. Aufgrund der hohen Sicherheitsanforderungen an einen Kernreaktor ist ein von sich aus korrosionsbeständiges und strahlungsresistentes Öffnungselement besonders vorteilhaft, da somit zusätzliche Maßnahmen zum Korrosionsschutz entfallen.

Wenngleich die Verschlußeinrichtung nicht nur auf Kühlwasser als ein Kühlfluid beschränkt ist, so ist Kühlwasser das bevorzugte Kühlmittel, welches bei der Kernschmelzenkühlung eingesetzt wird. Beim Kühlfluid, insbesondere im Falle der Kühlung einer Kernschmelze, kann es sich auch um eine Neutronen absorbierende, nicht brennbare Flüssigkeit handeln, z.B. ein Wasser-Borsäure-Gemisch.

Der Kunststoffklotz kann mit einem Dichtflansch gegen einen Rohrflansch am auslaßseitigen Ende der Verbindungsleitung dichtend gehalten sein. Dieser Kunststoffklotz besteht vorzugswseise aus einem thermoplastischen Material, z.B. Polypropylen oder Polyethylen. Die Wärmedämmung eines solchen Kunststoffklotzes ist besonders wirksam. Die aufschmelzbare Kunststoffplatte kann gegen eine Dichtfläche im Mündungsrandbereich der Verbindungsleitung dichtend verspannbar sein. Die erforderliche Wärmedämmwirkung läßt sich durch die Bemessung der Wanddicke der Kunststoffplatte einstellen. Das aufschmelzbare, an seinem freien Ende verschlossene Kunststoffrohr kann parallel zum Boden des Auffangsraumes geführt sein, so daß es zwangsläufig durch die Kernschmelze, auch wenn diese nur eine niedrige Höhe hat, aufgeschmolzen wird, auch dann, wenn in ihm Kühlwasser enthalten ist.

Die Verbindungsleitung und das angeflanschte Kunststoffrohr können als je ein Rohrknie mit einem aus der horizontalen abwärts bzw. aufwärts verlaufenden Rohrbogen geformt sein, so daß eine etwa S-förmig verlaufende Leitungsendpartie mit einem etwa horizontal im Auffangraum auslaufenden Kunststoffrohr gebildet ist.

Gemäß einer zweiten Ausführungsform der Erfindung (Anspruch 9) wird die Aufgabe dadurch gelöst, daß das Verschlußorgan als Öffnungselement eine ein Sollbruchverhalten aufweisende Dichtungsanordnung, bestehend aus einem Dichtungselement und zugehörigen Halteelementen aufweist, die weitgehend korrosionsbeständig und normalerweise thermisch isolierend gegenüber dem Kühlfluid ist und bei Hitzeeinwirkung durch die Schmelze durch Reißen, Bersten oder anderweitige Zerstörung der Dichtungsanordnung bedingt zumindest einen Teil des Auslaßquerschnitts der Verbindungsleitung freigibt.

Dadurch kann das Kühlfluid aus dem Kühlfluidreservoir über die Verbindungsleitung zur Oberfläche der Kernschmelze gelangen.

Vorteilhafte Weiterbildungen dieser Ausführungsform sind den Unteransprüchen 10 bis 18 und 23 bis 29 zu entnehmen.

Das Dichtungselement kann eine Berstscheibe oder eine Berstmembrane sein, z.B. eine Glasplatte als Berstscheibe, welche bereits eine ausreichende Kältedämmung bewirkt, oder eine metallische Berstmembrane, wobei es dann zweckmäßig ist, einen der metallischen Berstmembrane vorgeschalteten Raum des Verschlußorgans als Dampfdruckraum auszubilden, der für die erforderliche Kältedämmung sorgt.

Die Dichtungsanordnung des Verschlußorgans bzw. sein temperaturabhängiger Öffnungsmechanismus kann auch eine Dehnbolzen-Verspannung aufweisen, wobei der Dehnbolzen eine durch Querschnittsverminderung gebildete Bolzen-Abreißstelle aufweist, welche bei einem Grenzwert der temperaturbedingten Dehnbolzen-Längung reißt und die Dichtklappe zur Öffnung freigibt. Anstelle eines Dehnbolzens kann auch ein korrosionsbeständiger Schmelzbolzen verwendet werden, der einen hinreichenden Abstand von der Kühlfluidsäule der Verbindungsleitung aufweist. Der Schmelzbolzen hat dabei eine Schmelztemperatur oberhalb 500 °C, insbesondere oberhalb 700 °C. Er weist vorzugsweise einen hohen Silberanteil von über 50 % auf. Weiterhin kann der Schmelzbolzen neben Silber Palladium, beispielsweise 5 % bis 25 %, sowie Kupfer, beispielsweise von 0 % bis ca. 35 %, aufweisen und hat eine Schmelztemperatur oberhalb 800 °C.

Eine besonders günstige Ausführungsform besteht in einer Glasplatte, die von einer Gummi-Manschettendichtung eingefaßt ist und von einer thermischen Berstscheibe in abstützender und zugleich kältedämmender Relation dichtend verspannt ist, so daß bei Zerstörung der thermischen Berstscheibe aufgrund der Schmelzenhitze die nicht abgestützte Glasplatte vom statischen Wasserdruck am auslaßseitigen Ende der Verbindungsleitung zerstörbar ist.

Gemäß einer dritten Ausführungsform der Erfindung (Anspruch 19) wird die Aufgabe dadurch gelöst, daß das Verschlußorgan ein Öffnungselement aufweist, das weitgehend korrosionsbeständig und normalerweise thermisch isolierend gegenüber dem Kühlfluid ist und in dem Hilfsenergie gespeichert ist, durch die es bei Hitzeeinwirkung der Schmelze in die Öffnungsstellung bringbar ist.

Vorteilhafte Weiterbildungen dieser Ausführungsform sind den Unteransprüchen 20 bis 22 zu entnehmen.

Eine besonders vorteilhafte Ausgestaltung der zweiten Ausführungsform (Anspruch 9) zeichnet sich dadurch aus, daß ein am auslaßseitigen Ende der Verbindungsleitung angeordnetes haubenartiges Verschlußorgan vorgesehen ist, welches durch wenigstens eine umlaufende Schmelzlotverbindung aus einem korrosionsbeständigen Silberlot in einen äußeren und in einen inneren Haubenteil unterteilt ist, wobei der äußere Haubenteil bei Aufschmelzen der Schmelzlotverbindung aufgrund einer Hitzeeinwirkung durch die Kernschmelze abfällt und den Auslaßquerschnitt des auslaßseitigen Endes der Verbindungsleitung freigibt. Damit die Schmelzlotverbindung bei Auftreten einer Kernschmelze möglichst schnell schmilzt, ist zwischen dem haubenartigen Verschlußorgan und einer Verlängerung der Verbindungsleitung zweckmäßigerweise ein Ringspalt vorgesehen, der im Bereich der Schmelzlotverbindung mit einem Luftpolster gefüllt ist, welches die Wassersäule von der Schmelzlotverbindung fernhält. Die auf die Schmelzlotverbindung wirkende Kernschmelzenhitze und Strahlung können auch durch einen schirmartigen Wärmestrahlungsreflektor, der das haubenartige Verschlußorgan umgibt und in dessen Brennfleckzone sich die Schmelzlotverbindung befindet, verstärkt werden. Unter einem korrosionsbeständigen Silberlot wird ein Schmelzlot verstanden, welches einen Silberanteil von über 50 % und eine Liquidustemperatur von über 600 °C hat. Vorzugsweise weist das Silberlot einen Anteil an Palladium, gegebenenfalls auch an Kupfer, auf. Beispielsweise kann es aus 58 % Ag, 32 % Cu und 10 % Pd bestehen, mit einer Liquidustemperatur von etwa 850 °C. Eine andere Zusammensetzung des Schmelzlotes, wie weiter oben beschrieben, ist ebenfalls möglich. Andere weitgehende korrosionsbeständige Schmelzlote mit Liquidustemperaturen oberhalb 600 °C können ebenfalls verwendet werden.

Im folgenden werden anhand mehrerer in der Zeichnung dargestellter Ausführungsbeispiele die Erfindung sowie weitere Merkmale und Vorteile und deren Wirkungsweise noch näher erläutert. In der Zeichnung zeigt in zum Teil vereinfachter, schematischer Darstellung:
- Figur 1: das auslaßseitige Ende der Verbindungsleitung mit einem Kunststoffklotz als Dichtungselement des Verschlußorgans und die anliegende Ausbreitungsfläche des Auffangraumes für die Kernschmelze im Ausschnitt (1. Ausführungsbeispiel),
- Figur 2: ein zweites Ausführungsbeispiel mit einem Verschlußorgan, das als Dichtungselement eine Glasoder eine Kunststoffplatte aufweisen kann, am auslaßseitigen Ende des Verbindungsrohres, welches von einem nicht näher dargestellten Kühlwasserreservoir durch eine Betonwand hindurchgeführt ist und mit seinem Verschlußorgan kurz oberhalb des Bodens des Auffangraumes für die Kernschmelze endet, in einem Ausschnitt,
- Figur 3: in entsprechender Darstellung zu Figur 2 eine weitere Variante für das Verschlußorgan mit einem Kunststoffrohr am auslaßseitigen Ende der Verbindungsleitung, welches parallel zum Boden der Auffangkammer verlegt ist,
- Figur 4: eine Verschlußeinrichtung mit einer metallischen Berstmembrane am auslaßseitigen Ende der Verbindungsleitung, wobei ein Dampfdruckraum der Berstmembrane vorgeschaltet ist und eine Rückschlagklappe den Dampfdruckraum von der Wassersäule abtrennt,
- Figur 5: eine Verschlußeinrichtung mit einer Dichtklappenanordnung am auslaßseitigen Ende der Verbindungsleitung und einem die Dichtklappenhälfte in ihrer Dichtposition haltenden Dehnbolzen mit Sollbruchstelle, dem eine Thermo-Dehnpatrone mit Heizrippen zugeordnet ist,
- Figur 6: eine Verschlußeinrichtung, ebenfalls mit Dichtklappe, deren Klappenhälften durch einen Schmelzbolzen in ihrer Dichtposition gehalten werden,
- Figur 7: eine Verschlußeinrichtung mit Glasplatte als Berstelement, eingefaßt von einer Gummimanschette und in Dichtposition gehalten durch eine thermische Berstscheibe, ebenfalls aus Glas bestehend,
- Figur 8: eine Verschlußeinrichtung mit einem Öffnungsventil, dessen auf einer Kolbenseite angreifende Ventilöffnungsfeder gegen den auf der anderen Kolbenseite herrschenden Druck normalerweise gespannt ist und mit einem aufschmelzbaren Sensorelement am Boden der Auffangkammer zum störfallbedingten Druckabbau,
- Figur 9: eine Verschlußeinrichtung, bei der als Dichtungselement eine selbstdichtende Manschette die Mündung der Verbindungsleitung normalerweise verschließt und in ihre Dichtposition durch eine Thermit-Schmelzpackung gehalten wird, die im Kernschmelzfalle zum Abschmelzen gebracht wird,
- Figur 10: eine Verschlußeinrichtung mit einem haubenartigen Verschlußorgan und einem zwischen Mundungsrohr und Haube vorgesehenen Ringspalt, der im Bereich einer umlaufenden Schmelzlotverbindung mit einem Luftpolster versehen ist,
- Figur 11: eine Verschlußeinrichtung, ebenfalls mit einem haubenartigen Verschlußorgan und umlaufender Schmelzlotverbindung an diesem, wobei jedoch durch eine Manschettendichtung, die an der Stirnwand der Haube verankert ist, das Kühlwasser vom Haubeninnenraum ferngehalten wird, und
- Figur 12: eine Verschlußeinrichtung mit einwärts gestülptem äußerem Haubenteil mit umlaufender Schmelzlotverbindung zwischen innerem und äußerem Haubenteil und einem nicht selbsthemmenden Dichtkegel zum Verschluß der Rohrmündung der Verbindungsleitung, wobei der Dichtkegel durch den äußeren Haubenteil in seiner Dichtposition gehalten wird.

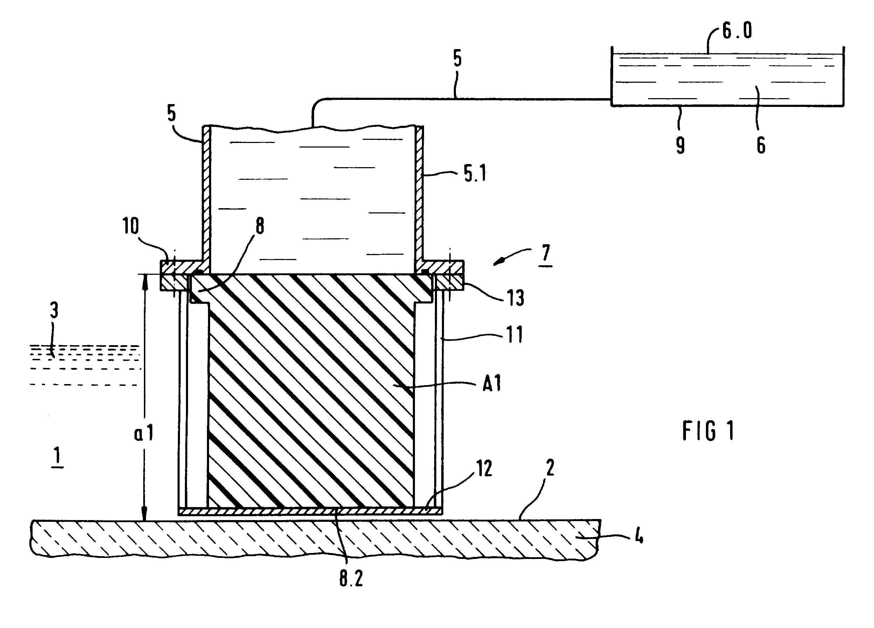

Figur 1 zeigt im Ausschnitt den Auffangraum 1 für die Kernschmelze 3 einer Druckwasser-Kernreaktoranlage, deren Kernrückhaltevorrichtung oder auch Core Catcher nach dem Ausbreitungsprinzip arbeitet. Zu diesem Zweck weist der Auffangraum 1 eine bodenseitige Ausbreitungsfläche 2 auf, die bei einem Kernreaktor mit einer Leistung von 1300 MWₑₗ z.B. eine Fläche von 150 m² überstreichen kann, damit sich die schematisch bei 3 angedeutete Kernschmelze großflächig und mit relativ kleiner Schmelzenhöhe ausbreiten kann. Die Ausbreitungsflache 2 wird von einer Betonstruktur 4 gebildet, wobei die oberste Schicht dieser Betonstruktur aus sogenanntem Opferbeton bestehen kann, das ist ein Beton, der sich mit der Kernschmelze verbindet und insbesondere schmelzpunkt-erniedrigend wirkt, so daß die Kernschmelze dünnflüssiger wird. Unterhalb der Betonstruktur 4 und an den nicht dargestellten Seitenflanken können noch Zirkonoxid-Steine in Gestalt eines Mauerwerks angeordnet sein und darunter befindet sich dann die eigentliche Betonstruktur (in Figur 1 nicht dargestellt).

Die mit dem auslaßseitigen Ende 5.1 vertikal ausgerichtete Verbindungsleitung 5 für Kühlwasser 6 dient zum Ingangsetzen der Kühlung für die Kernschmelze 3. Sie ragt mit ihrem auslaßseitigen Ende 5.1 in den Auffangraum 1 und endet mit vertikalem Abstand al zur Ausbreitungsfläche 2. Mit ihrer schematisch dargestellten Einlaßseite ist die Verbindungsleitung 5 an ein schematisch-verkleinert dargestelltes Kühlwasserreservoir 9 angeschlossen. Dabei handelt es sich insbesondere um den sogenannten IRWST (= In-Containment-Refueling Water Storage Tank) einer Druckwasser-Kernreaktoranlage. Dieses Kühlmittelreservoir kann z.B. ein Kühlmittelvolumen von 1500 m³ oder mehr aufweisen. Der Kühlmittelspiegel 6.0 liegt weit oberhalb des Auslaßendes 5.1, so daß im Kühlungsfalle genügend Wassermengen aus dem Auslaßende 5.1 auf die Kernschmelze 3 strömen können. Am auslaßseitigen Ende 5.1 der Verbindungsleitung 5 ist ein als Ganzes mit 7 bezeichnetes Verschlußorgan für die Verbindungsleitung 5 angeordnet, mit einem nichtmetallischen Dichtungselement 8 in Gestalt eines Kunststoffklotzes, welches das auslaßseitige Ende 5.1 normalerweise dichtend verschließt und welches bei Hitzeeinwirkung der Kernschmelze 3 unter Freigabe zumindest eines Teils des Auslaßquerschnitts der Verbindungsleitung 5 aufschmelzbar ist, so daß das Kühlwasser 6 aus dem Kühlwasserreservoir 9 zur Oberfläche der Kernschmelze 3 leitbar ist.

Das Dichtungselement 8 ist in Anpassung an den hohlzylindrischen Rohrquerschnitt der Verbindungsleitung 5 als massiver, zylindrischer Kunststoffklotz ausgeführt. Dieser ist mit einem Dichtflansch 8.1 gegen einen Rohrflansch 10 am auslaßseitigen Ende 5.1 der Verbindungsleitung 5 dichtend gehalten. Zur Halterung des Dichtungselementes bzw. Kunststoffklotzes 8 in seiner Dichtposition ist am Rohrflansch 10 ein Zugelement 11 verankert. Dieses Zugelement 11 greift an einem Druckorgan 12 an, welches seinerseits an einer dem Dichtflansch 8.1 abgewandten Stirnfläche 8.2 des Dichtungselementes 8 angreift. Das Zugelement 11 ist als eine Stahlzarge ausgebildet, also als ein Hohlzylinder aus Stahl, der an seinem oberen Ende mit einem Flanschring 13 fest verbunden ist, z.B. durch Verschweißung. Das Zugelement 11 wird mittels dieses Flanschringes 13 am Rohrflansch 10 der Verbindungsleitung 5, wie dargestellt, verspannt. Beim Verspannungsvorgang werden über das Druckorgan 8.2 die erforderlichen Verspannungskräfte auf das Dichtungselement 8 ausgeübt, so daß dieses fest und dichtend gegen den Rohrflansch 10 gepreßt wird. Die Verbindung zwischen dem Zugelement 11 (Stahlzarge) und dem Druckorgan 12 (insbesondere ausgeführt als eine Platte) erfolgt ebenfalls durch Verschweißen. Anstelle der Stahlzarge 11 könnten auch mehrere Zuganker über den Umfang des Dichtungselementes 8 verteilt vorgesehen sein, die mit dem Druckorgan 8.2 und dem Rohrflansch 10 spannbar zu verbinden wären.

Wird das Zugelement bzw. die Stahlzarge 11 durch die sich ausbreitende Kernschmelze 3 erreicht, so wird sie aufgeschmolzen und die Verspannung für das Dichtungselement 8 zerstört. Dieses wird von der Kernschmelze 3 weggespült und dabei gleichfalls aufgeschmolzen, so daß der Weg für das Kühlwasser 6 frei wird. Der Abstand Rohrflansch 10 - Ausbreitungsfläche 2, der mit al bezeichnet ist, ist größer als die maximale Höhe der Kernschmelze 3, so daß auf jeden Fall immer Kühlwasser zur Oberfläche der Kernschmelze strömen kann.

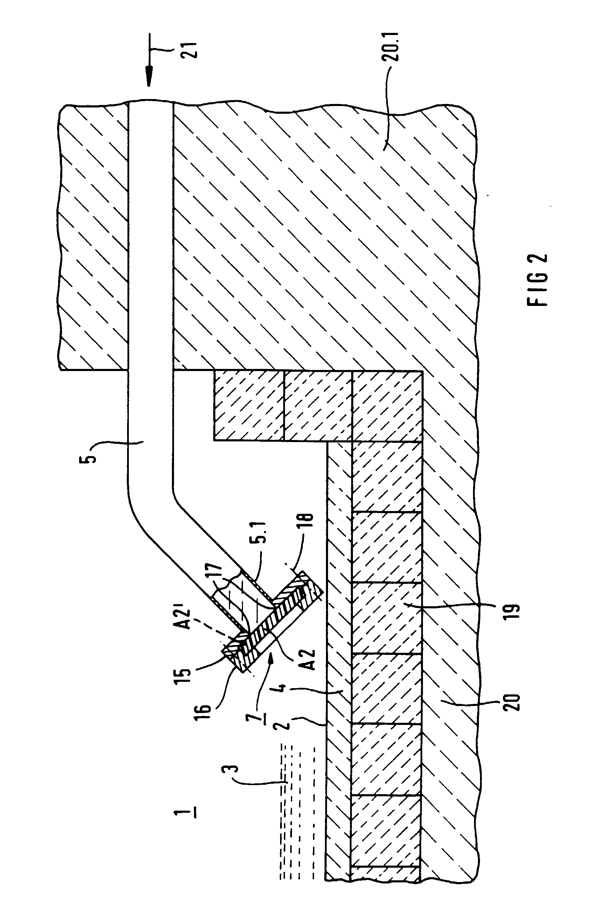

Beim zweiten Ausführungsbeispiel nach Figur 2 ist eine mit ihrem Auslaßende 5.1 schräg nach unten abgewinkelte Verbindungsleitung 5 an ihrem Mündungsende durch eine Kunststoffplatte A2 als Dichtungselement verschlossen. Hierzu ist das Auslaßende 5.1 der Verbindungsleitung 5 mit einem Rohrflansch 15 versehen, und das Dichtungselement A2 wird in seinem Randbereich von einem Gegenflansch 16 umfaßt und von dem am Rohrflansch 15 verspannbaren Gegenflansch 16 dichtend gegen die Dichtfläche 17 gedrückt. Die Flanschschrauben sind bei 18 angedeutet. Die Verbindungsleitung 5 ist vorzugsweise eine hohlzylindrische Rohrleitung, so daß das Dichtungselement A2 die Gestalt einer Kunststoffscheibe oder kreisförmigen Platte hat. Gemäß einer anderen günstigen Ausführungsform ist das Dichtungselement A2 eine Berstscheibe aus Glas.

Der Opferbeton 4 ist durch ZrO₂-Steine 19 hinterfüttert, die neutronenabsorbierend wirken. Unterhalb bzw. seitlich zu den Zirkonoxidsteinen 19 befindet sich die Gebäude-Betonstruktur 20 mit einer den Auffangraum 1 zum Kühlwasserreservoir abtrennenden Wandstruktur 20.1, durch welche die Verbindungsleitung 5 hindurchgeführt ist. Der Pfeil 21 gibt die Strömungsrichtung des Kühlwassers an. Das Dichtungselement A2 in Form der Kunststoffplatte wird, wenn es von der sich ausbreitenden Kernschmelze 3 erreicht wird, aufgeschmolzen, und das Kühlwasser gelangt vom Kühlwasserreservoir bzw. IRWST über die Verbindungsleitung 5 in den Auffangraum 1. Der Vorgang läuft anders ab, wenn eine der Kernschmelzenhitze ausgesetzte Berstscheibe aus Glas als Dichtungselement A2 birst.

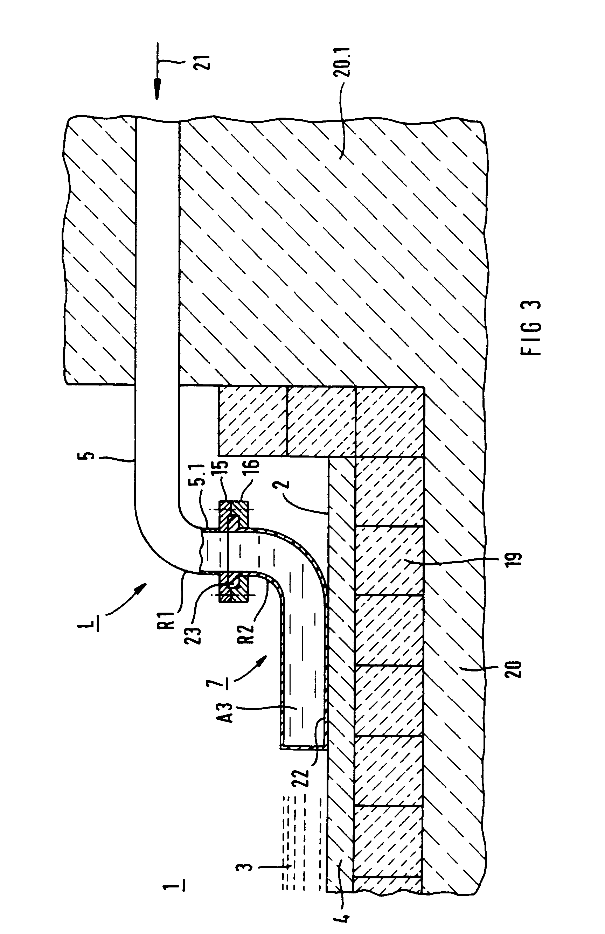

Beim dritten Ausführungsbeispiel nach Figur 3 ist an das auslaßseitige Ende 5.1 der Verbindungsleitung 5 ein aufschmelzbares, an seinem freien Ende verschlossenes Kunststoffrohr 22 dichtend angeflanscht. Die Verbindungsleitung 5 und das angeflanschte Kunststoffrohr 22 sind bevorzugt als je ein Rohrknie mit einem aus der Horizontalen abwärts bzw. aufwärts verlaufenden Rohrbogen R1 bzw. R2 geformt, so daß eine etwa S-förmig verlaufende Leitungsendpartie L mit einem etwa horizontal im Auffangraum 1 auslaufenden Kunststoffrohr 22 gebildet ist. Der Rohrflansch ist wieder mit 15, der das Kunststoffrohr 22 übergreifende und dessen Ringflansch 23 dichtend gegen den Rohrflansch 15 pressende Gegenflansch mit 16 bezeichnet. Das Kunststoffrohr 22 wird an seinem parallel zur Ausbreitungsfläche 2 verlaufenden horizontalen Schenkel 22.1, wenn es von der sich ausbreitenden Kernschmelze 3 erreicht wird, zerstört, so daß sich die Mündung für das Kühlwasser im Bereich der Flanschanordnung 15, 16, 23 befindet und somit gewährleistet ist, daß das Kühlwasser die Oberfläche der Kernschmelze 3 benetzt.

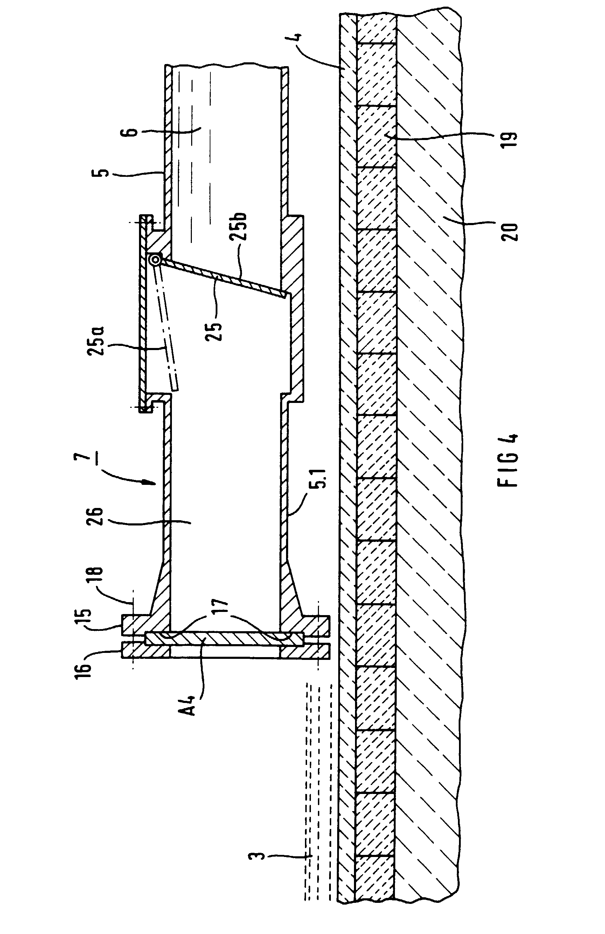

Anhand von Figur 2 wurde bereits eine Verschlußeinrichtung mit einem Sollbruchverhalten aufweisenden Dichtungselement A2 in Form einer Glasplatte oder Glasscheibe erläutert. In Figuren 4 bis 7 sind Ausführungsbeispiele für weitere Verschlußeinrichtungen dargestellt, die alle eine Dichtungsanordnung mit einem Sollbruchverhalten aufweisen. Mit Figur 4 weist das Verschlußorgan 7 der Verbindungsleitung 5 eine metallische Berstmembran A4 als Dichtungselement auf, die zwischen einem Rohrflansch 15 und einem Gegenflansch 16 dichtend eingespannt ist. Zwischen der Berstmembrane A4 und einer an einer weiter stromaufwärts der Verbindungsleitung 5 gelegenen Stelle angeordneten Rückschlagklappe 25 ist ein Dampfdruckraum 26 vorgesehen. Bei Hitzeeinwirkung aufgrund einer sich ausbreitenden Kernschmelze 3 verdampft das als Kühlfluid verwendete Kühlwasser im Dampfdruckraum 26, wodurch die Rückschlagklappe 25 in ihrer dargestellten Ruhestellung entsprechend der Schließposition 25b von den Dampfdruckkräften gegen ihren Sitz gepreßt wird. Der sich aufbauende Dampfdruck im Dampfdruckraum 26 im Verein mit der Aufheizung der metallischen Berstmembrane A4 bringt diese zum Bersten. Dadurch baut sich der Dampfdruck ab, und die Rückschlagklappe 25 kann sich aufgrund des Druckes der auf ihr lastenden Wassersäule des Kühlwassers 6 öffnen (Öffnungsposition 25a).

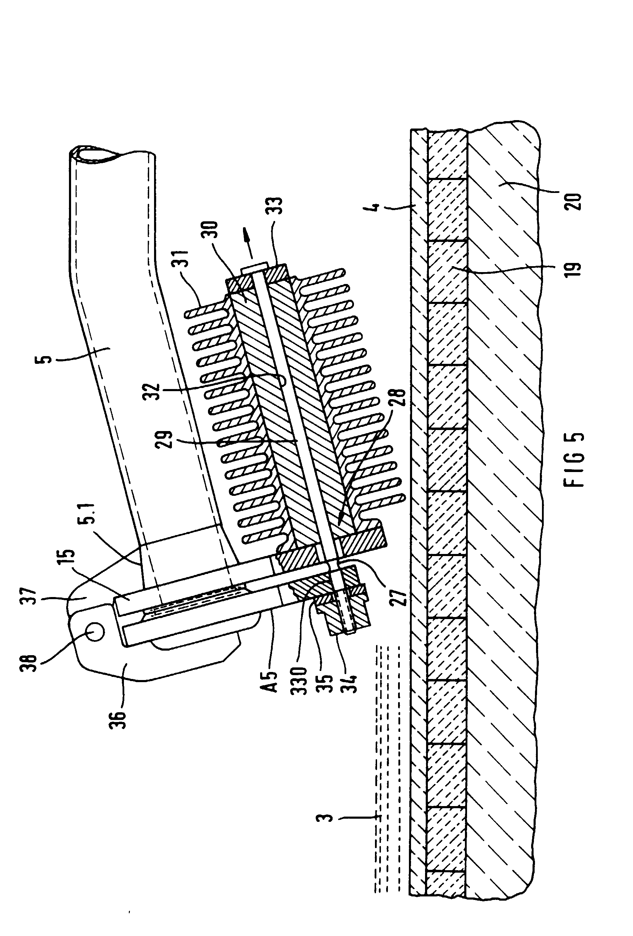

Beim Ausführungsbeispiel nach Figur 5 wird eine Dichtklappe 27 am Auslaßende 5.1 der Verbindungsleitung 5 durch eine Dehnbolzen-Verspannung 28 in ihrer Schließstellung gehalten. Der Dehnbolzen 29 wird von einer Thermo-Dehnpatrone 30 umgeben, die ihrerseits über Heizrippen 31 von der Kernschmelze 3 einen starken Wärmefluß empfängt. Der Dehnbolzen 29 hat eine Sollbruch- bzw. Abreißstelle 29.1, die bei Erreichen der Abreiß-Bolzentemperatur von z.B. 700° C anspricht. Der Dehnbolzen 29 durchdringt die Thermo-Dehnpatrone 30 in einem zentrischen Kanal 32, er hintergreift eine Ankerplatte 33 an der einen Stirnseite der Dehnpatrone 30 und ist, die Klappe 27 in einer Öffnung 330 durchdringend, mittels Bolzenmutter 34 mit Beilagscheibe 35 so verspannt, daß die Dichtklappe 27 mit einem umlaufenden Dichtungsrand gegen eine entsprechend umlaufende Dichtfläche am Rohrflansch 15 gepreßt wird. Die Dichtklappe 27 ist mit einem Bügel 36 an eine Lasche 37, die fest mit dem Rohrflansch 15 verbunden ist, auf- und zuklappbar angelenkt (Gelenkstelle 38). Die Thermo-Dehnpatrone 30 hat einen wesentlich größeren Wärmeausdehnungskoeffizienten als der Dehnbolzen 29, so daß dann, wenn aufgrund der Erhitzung sich eine vorgegebene Differenzdehnung für den Dehnbolzen 29 er; gibt, dieser an der Stelle 29.1 abreißt, die Dichtklappe 27 öffnet und der Weg für das Kühlwasser freigegeben ist.

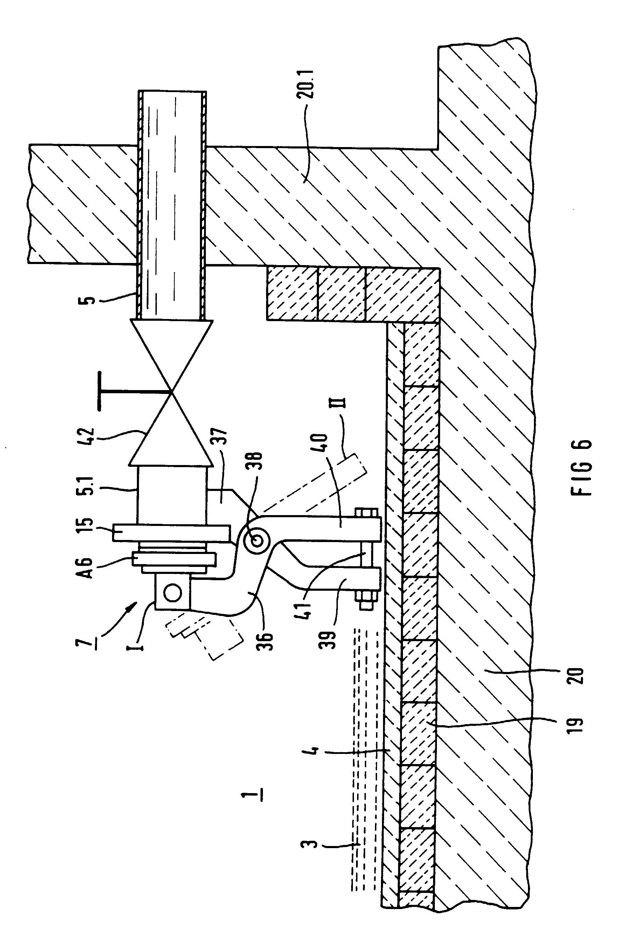

Beim Ausführungsbeispiel nach Figur 6 besteht die Dichtungsanordnung des Verschlußorgans 7 aus einer Dichtklappe 27. Der feste Klappensitz am Rohrflansch 15 und die Dichtklappe 27 sind mit zangenartigen Armen 39, 40 verbunden, die über das Klappengelenk 38 hinausragen und in der Dichtposition der Dichtklappe 27 durch eine Schmelzschraube 41 auf Abstand gehalten werden. Die Schmelzschraube 41 ist, wie dargestellt, im unteren Bereich der Auffangkammer 1 angeordnet und wird zerstört, wenn sie von der Kernschmelze 3 erreicht wird. Der Arm 40 mit der Dichtklappe 27 wird dann aus seiner Schließposition I in die geöffnete, strichpunktiert angedeutete Öffnungsposition II verschwenkt. Beim Schmelzbolzen bzw. bei der Schmelzschraube 41 kann es sich um einen solchen aus Silber handeln. In der Verbindungsleitung 5 ist zweckmäßigerweise ein Absperrschieber (schematisch bei 42 angedeutet) angeordnet. Dieser ist während des Normalbetriebs offen.

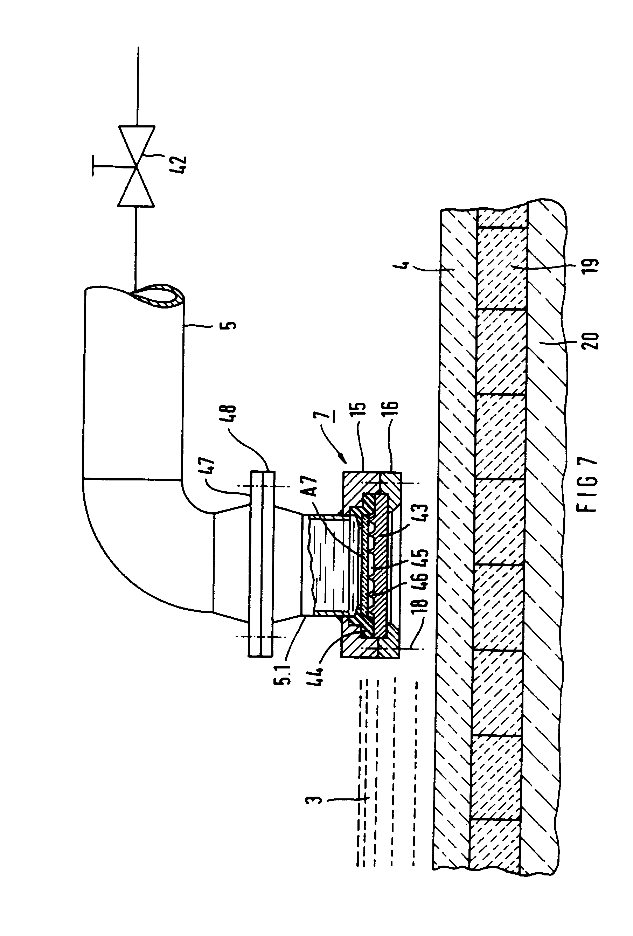

Im Ausführungsbeispiel nach Figur 7 ist eine Glasplatte 43, vorzugsweise aus Normalglas bestehend, von einer Gummimanschetten-Dichtung 44 eingefaßt. Eine thermische Berstscheibe A7 ist in abstützender und zugleich kältedänmender Relation gegen die Glasplatte 43 mittels Rohrflansch 15 und Gegenflansch 16 dichtend verspannt, wobei zwischen der Glasplatte 43 und der thermischen Berstscheibe A7 eine isolierende Luftschicht 45 liegt. Damit die Kaltebrucken möglichst klein gehalten werden, ist die thermische Berstscheibe 44 mit reliefartigen Erhebungen, insbesondere ringförmigen Erhebungen 46, versehen, mit denen sie an der Glasplatte 43 anliegt. Die thermische Berstscheibe A7 zersplittert bei entsprechender Temperaturbeanspruchung und fällt nach unten heraus. Dadurch entfällt die Stützwirkung für die Glasplatte 43, welche durch den statischen Wasserdruck der Wassersäule 6 aus ihrer Dichtmanschette 44 nach unten herausgedrückt wird. Das Verschlußorgan 7 ist als eine an einen Zwischenflansch 47 der Verbindungleitung 5 mittels Gegenflansch 48 anflanschbare Baueinheit ausgebildet. Bei 42 ist wieder ein Absperrschieber schematisch dargestellt.

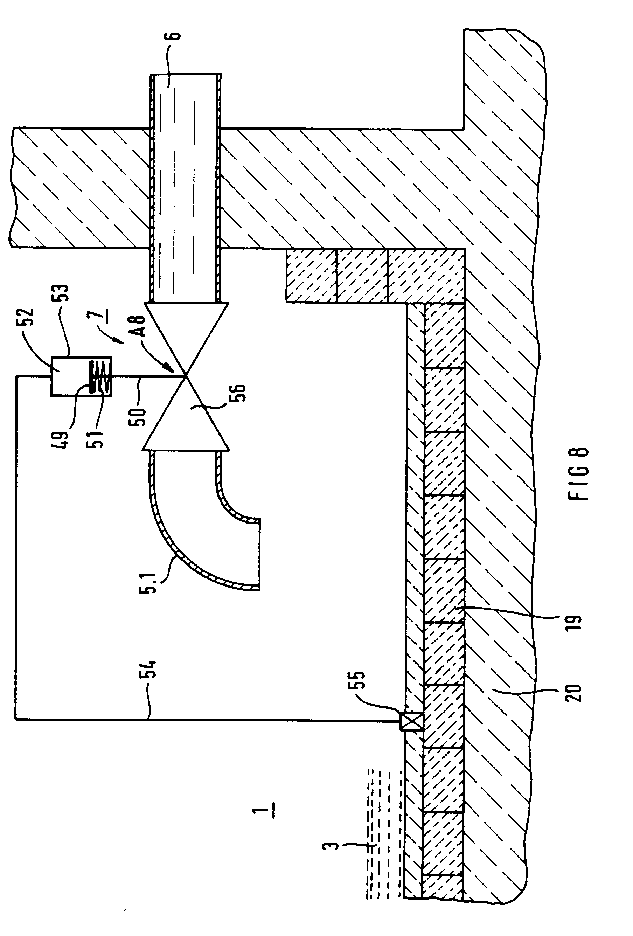

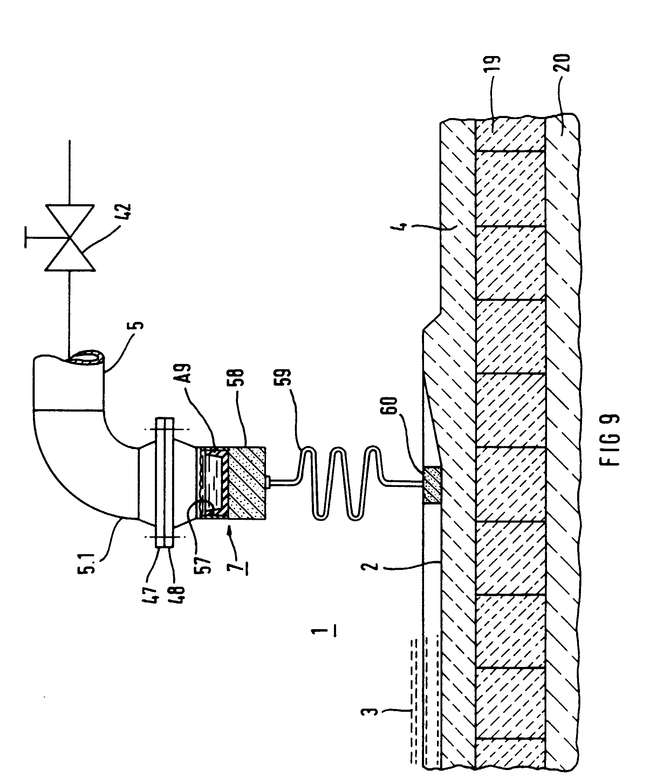

Bei den Verschlußeinrichtungen nach Figuren 8 und 9 ist das Dichtungelement jeweils mittels gespeicherter Hilfsenergie in seine Öffnungsstellung verlagerbar, wobei die Entladung bzw. der Verzehr der Hilfsenergie zur Öffnung des Verschlußorgans 7 durch die Hitzeeinwirkung der Schmelze 3 auslösbar ist. Gemäß Figur 8 ist das Verschlußorgan ein Ventil, dessen nicht näher bezeichnetes Verschlußstück mit einem Steuerkolben 49 über eine Kolbenstange 50 gekoppelt ist. Auf der einen Seite des Kolbens 49 greift die Kraft einer gespannten Ventilöffnungsfeder 51 an, und auf der anderen Kolbenseite lastet die aus einem fluidischen Steuerdruck resultierende Gegenkraft innerhalb des Raums 52 des Zylinders 53. Der fluidische, definierte Steuerdruck hält das Verschlußstück des Ventils in seiner Schließstellung, wobei das in sich geschlossene fluidische Steuerleitungssystem 54 für den Steuerdruck mindestens einen, im Bodenbereich der Auffangkammer 1 angeordneten Sensorkörper 55 umfaßt, der unter der Hitzeeinwirkung der Kernschmelze 3, z.B. an einer Soll-Aufschmelzstelle, öffnet und so den Steuerdruck abbaut. Das als Ganzes mit 56 bezeichnete Sicherheitsventil öffnet und gibt so den Weg für das Kühlwasser 6 frei, welches seinen Weg über das als ein nach unten weisender Rohrkrümmer ausgeführte Auslaßende 5.1 zur Oberfläche der Kernschmelze 3 nimmt. Das Steuerdrucksystem 54 kann auch mit einer Druck-Fernüberwachung versehen sein, die für eine Leckanzeige und zur Anzeige der ordnungsgemäßen Öffnung dienen kann.

Bei der Verschlußeinrichtung nach Figur 9 ist das Dichtungselement 8 eine unter Wasserdruck selbstdichtende Manschette, die sich an den Innenumfang der Mündung 57 der Verbindungsleitung 5 bzw. ihres auslaßseitigen Endes 5.1 anschmiegt und die in ihrer (dargestellten) Dichtposition durch eine an der Leitungsmündung 57 befestigte Thermit-Schmelzpackung 58 gehalten ist. Eine Zündschnur 59 ist von einem im Bodenbereich (Ausbreitungsfläche 2) der Auffangkammer 1 angeordneten Zünder 60 zu der mit Abstand oberhalb des Zünders 60 angeordneten Thermit-Schmelzpackung 58 verlegt, so daß nach Zünden des Zünders 60 durch die Hitze der Kernschmelze 3 und der dadurch ausgelösten Zerstörung der Thermit-Schmelzpackung 58 die Manschette 8 durch den im Mündungsbereich 57 der Verbindungsleitung 5 herrschenden Wasserdruck herausgedrückt wird.

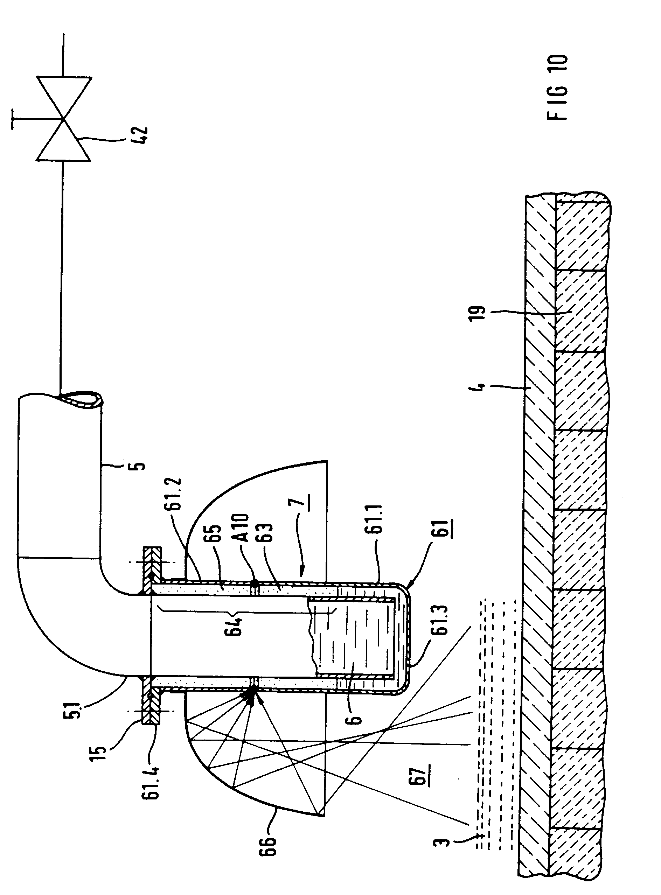

Die Verschlußeinrichtungen nach Figuren 10 bis 12 sind mit haubenartigen Verschlußorganen versehen, die durch umlaufende Schmelzlotverbindungen in äußere und innere Haubenteile 61.1 und 61.2 unterteilt sind. Von den umlaufenden Schmelzlotverbindungen A10 wird das Kühlwasser ferngehalten, damit ein schnelles und zuverlässiges Aufschmelzen unter der Hitzeeinwirkung der Kernschmelze 3 gewährleistet ist.

Im einzelnen ist das haubenartige Verschlußorgan 61 in Figur 10 mit seinem Ringflansch 61.4 am Rohrflansch 15 der Verbindungsleitung 5 dichtend angeflanscht. Das haubenartige Verschlußorgan 61 umgibt das über den Rohrflansch 15 hinausreichende bzw. verlängerte Rohrende (auslaßseitiges Ende 5.1) mit Ringspalt 63. Der Ringspalt 63 erstreckt sich vom Ringflansch 61.4 bis zum Haubenkopf 61.3. Der nach außen abgedichtete Ringspalt 63 kommuniziert mit der Wassersäule in der Verbindungsleitung 5 und ist auf einem Teil 64 seiner Länge mit einem an die Wassersäule anschließenden Luftpolsterraum 65 versehen. Die Schmelzlotverbindung A10 ist nun innerhalb dieses Luftpolsterraums 65 angeordnet und so gegen die direkte Kühlung durch das Kühlwasser 6 geschützt. Vorteilhaft ist es, das haubenartige Verschlußorgan 7 mit einem schirmartigen Wärmestrahlungsreflektor 66 zu umgeben, in dessen Brennfleckzone sich die Schmelzlotverbindung A10 befindet. Bei 67 ist die von der Kernschmelze 3 ausgehende Wärmestrahlung angedeutet, die auf die Schmelzlotverbindung A10 konzentriert wird. Damit ergibt sich außer einer Wärmeübertragung mittels Konvektion vor allen Dingen eine solche mittels Strahlung, die zu einem schnellen Aufschmelzen der Schmelzlotverbindung A10 und damit Abtrennen des äußeren Haubenteils 61.1 führt.

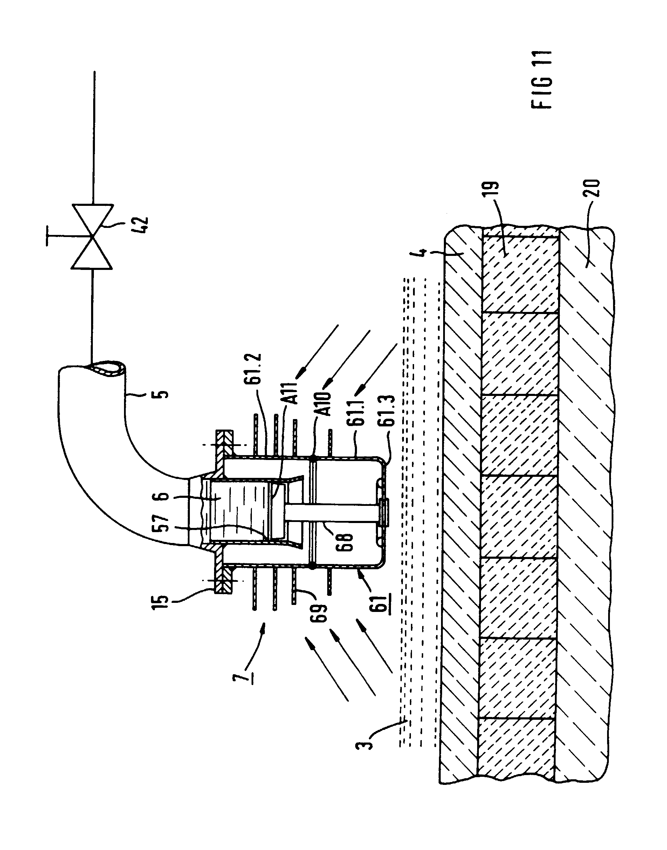

Bei der Verschlußeinrichtung nach Figur 11 ist vom äußeren Haubenteil 61.1 ein die Mündung 57 der Verbindungsleitung 5 abdichtendes Dichtungselement 8 in Form einer Dichtmanschette gehalten, so daß der äußere und innere Haubenteil 61.1, 61.2 und auch die Schmelzlotverbindung A10 zwischen beiden normalerweise wasserfrei sind. Das Dichtungselement 8 ist von einem zentrischen Schaft 68 gehalten, welcher seinerseits im unteren Haubenkopf 61.3 des äußeren Haubenteils 61.1 verankert ist. Der Außenumfang des haubenartigen Verschlußorgans 7 ist mit Heizrippen 69 versehen, damit ein möglichst starker Wärmefluß zur Schmelzlotverbindung A10 erfolgt, wenn sich eine Kernschmelze 3 ausbreitet. Alternativ dazu könnte auch der Wärmestrahlungsreflektor 66 nach Figur 10 verwendet sein. Bei Aufschmelzen der Schmelzlotverbindung A10 kann die Dichtmanschette 8 an ihrem zentralen Schaft 68 nicht mehr gehalten werden; sie wird durch den Wasserdruck innerhalb der Mündung 57 der Verbindungsleitung 5 (etwa 0,3 bar) herausgedrückt, und das Kühlwasser ergießt sich auf die Oberfläche der Kernschmelze 3.

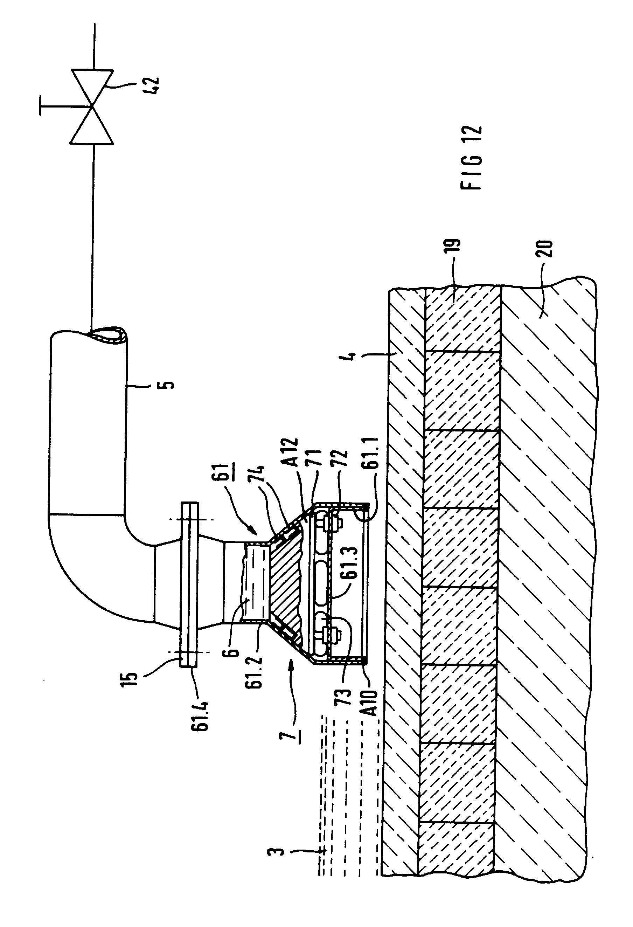

Bei der Verschlußeinrichtung nach Figur 12 gehört zum Verschlußorgan 7 ein nicht selbsthemmender Dichtkegel A12, welcher das sich konisch erweiternde Auslaßende des inneren Haubenteils 61.2 verschließt. Der Dichtkegel A12 wird in seinem Dichtsitz über eine Spannplatte 71 und darauf von außen einwirkende Abdrückschrauben 72 gehalten. Die Abdrückschrauben 72 sind im Boden 61.3 des äußeren Haubenteils 61.1 gehalten, welcher mittels einer umlaufenden Schmelzlotverbindung 62 mit dem inneren Haubenteil 61.2 verbunden ist. Zur gleichmäßigen Übertragung des Dichtdruckes auf die Spannplatte 71 und damit den Dichtkegel A12 sind elastisch deformierbare Körper 73, z.B. Gummikissen oder Gummipolster, vorgesehen. Zwischen dem Dichtkegel A12 und der sich konisch erweiternden Dichtungsgegenfläche sind noch eine oder mehrere U-Dichtungsmanschetten 74 eingefügt. Beim Aufschmelzen des umlaufenden Schmelzlotringes 62 wird der äußere Haubenteil 61.1, da er nun keinen Halt mehr hat, zusammen mit seinen Abdrückschrauben 72, den Körpern 73, der Spannplatte 71 und dem Dichtkegel A12 vom Druck des Wassers nach außen geschoben und von der Kernschmelze 3 aufgeschmolzen. Das Wasser 6 ergießt sich somit über die Oberfläche der Kernschmelze 3, weil auch der größte Teil des inneren Haubenteils 61.2 (der nicht mit dem Kühlwasser direkt in Verbindung steht) weggeschmolzen ist.

## Patentansprüche

1. Temperaturabhängig öffnende Verschlußeinrichtung an einer Verbindungsleitung (5) für Kühlfluid (6), zum Ingangsetzen der Kühlung für eine Kernschmelze (3) in einer Kernreaktoranlage,
- wobei die Verbindungleitung (5) auslaßseitig in einen Auffangraum (1) für die Kernschmelze (3) ragt und einlaßseitig an ein Kühlfluidreservoir (9), insbesondere ein Kühlwasserreservoir, angeschlossen ist,
- mit einem am auslaßseitigen Ende (5.1) der Verbindungsleitung (5) angeordneten Verschlußorgan (7), welches das auslaßseitige Ende (5.1) normalerweise dichtend verschließt und welches ein temperaturabhängiges Öffnungselement (A1-A3) hat, das bei Hitzeeinwirkung der Kernschmelze (3) die Freigabe zumindest eines Teils des Auslaßquerschnitts der Verbindungsleitung (5) auslöst, so daß das Kühlfluid (6) aus dem Kühlfluidreservoir (9) über die Verbindungsleitung (5) in den Auffangraum (1) geleitet wird,
**dadurch gekennzeichnet,** daß das Verschlußorgan (7) als Öffnungselement einen Kunststoffklotz (Al) oder eine aufschmelzbare Kunststoffplatte (A2)oder ein aufschmelzbares an seinem freien Ende verschlossenes Kunststoffrohr (A3) aufweist, die weitgehend korrosionsbeständig und normalerweise thermisch isolierend gegenüber dem Kühlfluid (6) sind.

2. Verschlußeinrichtung nach Anspruch 1,
**dadurch gekennzeichnet,** daß der Kunststoffklotz (Al) mit einem Dichtflansch (8) gegen einen Rohrflansch (10) am auslaßseitigen Ende (5.1) der Verbindungsleitung (5) dichtend gehalten ist.

3. Verschlußeinrichtung nach Anspruch 2,
**dadurch gekennzeichnet,** daß der Kunststoffklotz (Al) mittels wenigstens eines am Rohrflansch (10) verankerten Zugelementes (11) in seiner Dichtposition gehalten ist, wobei das Zugelement (11) an einem Druckorgan (12) angreift, welches seinerseits an einer dem Dichtflansch (8) abgewandten Stirnfläche des Kunststoffklotzes (Al) angreift.

4. Verschlußeinrichtung nach Anspruch 3, **dadurch gekennzeichnet,** daß das Zugelement (11) als eine Stahlzarge ausgebildet ist, die an ihrem einen Ende mit einem Flanschring (13) verbunden und mittels dieses Flanschringes (13) am Rohrflansch (10) der Verbindungsleitung (5) verspannbar sowie an ihrem anderen Ende mit dem Druckorgan (12) verbunden ist.

5. Verschlußeinrichtung nach Anspruch 1,
**dadurch gekennzeichnet,** daß die aufschmelzbare Kunststoffplatte (A2) gegen eine Dichtfläche (17) im Mündungsrandbereich der Verbindungsleitung (5) dichtend verspannbar ist.

6. Verschlußeinrichtung nach Anspruch 5,
**dadurch gekennzeichnet,** daß die Dichtfläche (17) von einem am auslaßseitigen Ende der Verbindungsleitung (5) angeordneten Rohrflansch (15) gebildet ist und die Kunststoffplatte (A2) in ihrem Randbereich von einem Gegenflansch (16) umfaßt und von dem am Rohrflansch (15) verspannbaren Gegenflansch (16) dichtend gegen die Dichtfläche (17) drückbar ist.

7. Verschlußeinrichtung nach Anspruch 1,
**dadurch gekennzeichnet,** daß das aufschmelzbare, an seinem freien Ende verschlossene Kunststoffrohr (A3) an das auslaßseitige Ende (5.1) der Verbindungsleitung (5) dichtend angeflanscht ist.

8. Verschlußeinrichtung nach Anspruch 7,
**dadurch gekennzeichnet,** daß die Verbindungsleitung (5) und das angeflanschte Kunststoffrohr (A3) als je ein Rohrknie mit einem aus der Horizontalen abwärts bzw. aufwärts verlaufenden Rohrbogen (R1, R2) geformt sind, so daß eine etwa S-förmig verlaufende Leitungsendpartie (L) mit einem etwa horizontal im Auffangraum (1) auslaufenden Kunststoffrohrteil (22) gebildet ist.

9. Temperaturabhängig öffnende Verschlußeinrichtung an einer Verbindungsleitung (5) für Kühlfluid (6), zum Ingangsetzen der Kühlung für eine Kernschmelze (3) in einer Kernreaktoranlage,
- wobei die Verbindungleitung (5) auslaßseitig in einen Auffangraum (1) für die Kernschmelze (3) ragt und einlaßseitig an ein Kühlfluidreservoir (9), insbesondere ein Kühlwasserreservoir, angeschlossen ist,
- mit einem am auslaßseitigen Ende (5.1) der Verbindungsleitung (5) angeordneten Verschlußorgan (7), welches das auslaßseitige Ende (5.1) normalerweise dichtend verschließt und welches ein temperaturabhängiges Öffnungselement (A4-A7) hat, das bei Hitzeeinwirkung der Kernschmelze (3) die Freigabe zumindest eines Teils des Auslaßquerschnitts der Verbindungsleitung (5) auslöst, so daß das Kühlfluid (6) aus dem Kühlfluidreservoir (9) über die Verbindungsleitung (5) in den Auffangraum (1) geleitet wird,
**dadurch gekennzeichnet,**
daß das Verschlußorgan (7) als Öffnungselement eine ein Sollbruchverhalten aufweisende Dichtungsanordnung, bestehend aus einem Dichtungselement (A4-A7) und zugehörigen Haltemitteln aufweist, die weitgehend korrosionsbeständig und normalerweise thermisch isolierend gegenüber dem Kühlfluid (6) ist und bei Hitzeeinwirkung durch die Schmelze (3) durch Reißen, Bersten oder anderweitige Zerstörung der Dichtungsanordnung bedingt zumindest einen Teil des Auslaßquerschnitts der Verbindungsleitung (5) freigibt.

10. Verschlußeinrichtung nach Anspruch 9,
**dadurch gekennzeichnet,**
daß das Verschlußorgan (7) als Öffnungselement eine Berstscheibe oder Berstmenbrane (A4) aufweist, welche gegen eine Dichtfläche (17) im Mündungsrandbereich der Verbindungsleitung (5) dichtend verspannbar ist und welche unter Hitzeeinwirkung durch Kernschmelze (3) birst.

11. Verschlußeinrichtung nach Anspruch 9 oder 10,
**gekennzeichnet durch**
eine Glasplatte (A2') als Dichtungs- und Öffnungselement.

12. Verschlußeinrichtung nach Anspruch 9 oder 10,
**gekennzeichnet durch**
eine metallische Berstmembrane (A4) als Dichtungs- und Öffnungselement.

13. Verschlußeinrichtung nach Anspruch 12,
**dadurch gekennzeichnet,**
daß zwischen der Berstmembrane (A4) und einer an einer weiter stromaufwärts der Verbindungsleitung (5) gelegenen Stelle angeordneten Rückschlagklappe (25) ein Dampfdruckraum (26) vorgesehen ist,
wobei durch Hitzeeinwirkung das als Kühlfluid verwendete Kühlwasser (6) im Dampfdruckraum (26) verdampft und die Rückschlagklappe (25) von den Dampfdruckkräften gegen ihren Sitz preßbar sowie bei Überschreiten eines Grenz-Dampfdrucks die Berstmembrane (A4) zum Bersten bringbar ist.

14. Verschlußeinrichtung nach Anspruch 9,
**dadurch gekennzeichnet,** daß das Verschlußorgan (7) als Dichtungselement eine Dichtklappe (A5) mit einer als Öffnungselement dienenden Dehnbolzen-Verspannung (28) aufweist, wobei der Dehnbolzen (29) eine durch Querschnittsverminderung gebildete Bolzen-Abreißstelle (27) aufweist, welche bei einem Grenzwert der temperaturbedingten Dehnbolzen-Längung reißt und die Dichtklappe (A5) zur Öffnung freigibt.

15. Verschlußeinrichtung nach Anspruch 14,
**dadurch gekennzeichnet,** daß der die Dichtklappe (A5) und ihren vom Rohrflansch (15) gebildeten Klappensitz zusammenhaltende Dehnbolzen (29) den temperaturabhängigen Zugkräften einer Thermo-Dehnpatrone (30) ausgesetzt ist.

16. Verschlußeinrichtung nach Anspruch 15,
**dadurch gekennzeichnet,** daß der Dehnbolzen (29) die Thermo-Dehnpatrone (30) mit einer Dehnlänge durchdringt und die Thermo-Dehnpatrone (30) an ihrem Außenumfang mit Heizrippen (31) versehen ist.

17. Verschlußeinrichtung nach Anspruch 9,
**dadurch gekennzeichnet**, daß als Dichtungselement des Verschlußorgans (7) eine Dichtklappe (A6) mit Bolzen-Verspannung besteht, wobei das Öffnungselement ein als korrosionsbeständiger Schmelzbolzen mit einer Schmelztemperatur oberhalb 600 °C ausgeführter Bolzen (41) ist, der bei Hitzeeinwirkung durch die Kernschmelze (3) gelängt und schließlich zerstört wird und so die Dichtklappe (A6) zur Öffnung freigibt.

18. Verschlußeinrichtung nach Anspruch 11,
**dadurch gekennzeichnet,** daß eine Glasplatte (A7) von einer Gummi-Manschettendichtung (44) eingefaßt ist und daß eine thermische Berstscheibe (43) in abstützender und zugleich kältedämmender Relation gegen die Glasplatte (A7), z.B. mittels Rohrflansch (15) und Gegenflansch (16), dichtend verspannt ist, so daß bei Zerstörung der thermischen Berstscheibe (43) aufgrund der Schmelzenhitze die nicht mehr abgestützte Glaspatte (A7) vom statischen Wasserdruck am auslaßseitigen Ende der Verbindungsleitung (5) zerstörbar ist.

19. Temperaturabhängig öffnende Verschlußeinrichtung an einer Verbindungsleitung (5) für Kühlfluid (6), zum Ingangsetzen der Kühlung für eine Kernschmelze (3) in einer Kernreaktoranlage,
- wobei die Verbindungleitung (5) auslaßseitig in einen Auffangraum (1) für die Kernschmelze (3) ragt und einlaßseitig an ein Kühlfluidreservoir (9), insbesondere ein Kühlwasserreservoir, angeschlossen ist,
- mit einem am auslaßseitigen Ende (5.1) der Verbindungsleitung (5) angeordneten Verschlußorgan (7), welches das auslaßseitige Ende (5.1) normalerweise dichtend verschließt und welches ein temperaturabhängiges Öffnungselement (A8-A9) hat, das bei Hitzeeinwirkung der Kernschmelze (3) die Freigabe zumindest eines Teils des Auslaßquerschnitts der Verbindungsleitung (5) auslöst, so daß das Kühlfluid (6) aus dem Kühlfluidreservoir (9) über die Verbindungsleitung (5) in den Auffangraum (1) geleitet wird,
**dadurch gekennzeichnet,** daß das Verschlußorgan (7) ein Öffnungselement aufweist, das weitgehend korrosionsbeständig und normalerweise thermisch isolierend gegenüber dem Kühlfluid (6) ist und in dem Hilfsenergie gespeichert ist, durch die es bei Hitzeeinwirkung der Schmelze (3), in die Öffnungsstellung bringbar ist.

20. Verschlußeinrichtung nach Anspruch 19,
**dadurch gekennzeichnet,** daß das Verschlußorgan (7) ein Ventil (56) ist, dessen als Dichtungselement dienendes Verschlußstück (A8) mit einem Steuerkolben (49) gekoppelt ist, auf dessen einer Seite die Kraft einer gespannten Ventilöffnungsfeder (51) angreift und auf dessen anderer Seite eine aus einem fluidischen Steuerdruck resultierende Gegenkraft angreift und das Verschlußstück (A8) in seiner Schließstellung hält, wobei ein in sich geschlossenes fluidisches Steuerleitungssystem (54) für den Steuerdruck mindestens einen, im Bodenbereich der Auffangkammer (1) angeordneten Sensorkörper (55) umfaßt, der unter der Hitzeeinwirkung der Schmelze das Steuerleitungssystem (54) öffnet und den fluidischen Steuerdruck abbaut, wodurch das Verschlußstück (A8) von der Ventilöffnungsfeder (51) in seine Öffnungsstellung verlagert wird.

21. Verschlußeinrichtung nach Anspruch 20,
**dadurch gekennzeichnet,** daß ein hohler Sensorkörper (55) eine Soll-Aufschmelzstelle aufweist.

22. Verschlußeinrichtung nach Anspruch 19, mit einem Kühlwasserreservoir (9),
**dadurch gekennzeichnet,** daß das Dichtungselement eine unter Wasserdruck selbstdichtende Dichtmanschette (A9) ist, die sich an den Innenumfang der Mündung (57) der Verbindungsleitung (5) anschmiegt und die in ihrer Dichtposition durch eine an der Leitungsmündung befestigte Thermit-Schmelzpackung (58) gehalten ist, wobei eine Zündschnur (59) von einem im Bodenbereich der Auffangkammer (1) angeordneten Zünder (60) zu der mit Abstand oberhalb des Zünders (60) angeordneten Thermit-Schmelzpackung (58) verlegt ist, so daß nach Zündung des Zünders (60) durch die Hitze der Schmelze (3) und der dadurch ausgelösten Zerstörung der Thermit-Schmelzpackung (58) die Manschette durch den im Mündungsbereich der Verbindungsleitung (5) herrschenden Wasserdruck herausgedrückt wird.

23. Verschlußeinrichtung nach Anspruch 9,
**gekennzeichnet durch** ein am auslaßseitigen Ende der Verbindungsleitung angeordnetes, haubenartiges Verschlußorgan (61), das durch wenigstens eine als Öffnungselement dienende umlaufende Schmelzlotverbindung (A10) aus einem korrosionsbeständigen Silberlot unterteilt ist in einen äußeren (61.1) und in einen inneren (61.2) Haubenteil, wobei der äußere Haubenteil (61.1) bei Aufschmelzen der Schmelzlotverbindung (A10) aufgrund einer Hitzeeinwirkung durch die Schmelze (3) abfällt und den Auslaßquerschnitt des auslaßseitigen Endes (5.1) der Verbindungsleitung (5) freigibt.

24. Verschlußeinrichtung nach Anspruch 23,
**dadurch gekennzeichnet,** daß das haubenartige Verschlußorgan (61) eine Verlängerung der Verbindungsleitung (5) mit Ringspalt (63) umgibt und sich bis zu einer Hauben-Flansch-Verbindung (61.4, 15) an der Verbindungsleitung (5) erstreckt,
daß der nach außen abgedichtete Ringspalt (63) mit der Wassersäule in der Verbindungsleitung (5) kommuniziert und auf einem Teil (64) seiner Länge mit einem an die Wassersäule anschließenden Luftpolsterraum (65) versehen ist,
und daß die Schmelzlotverbindung (A10) im Bereich des Luftpolsterraumes (65) angeordnet ist.

25. Verschlußeinrichtung nach Anspruch 23 oder 24,
**dadurch gekennzeichnet,** daß das haubenartige Verschlußorgan (61) von einem schirmartigen Wärmestrahlungsreflektor (66) umgeben ist, in dessen Brennfleckzone sich die Schmelzlotverbindung (A10) befindet.

26. Verschlußeinrichtung nach Anspruch 23,
**dadurch gekennzeichnet ,** daß vom äußeren Haubenteil (61.1) ein die Mündung (57) der Verbindungsleitung (5) abdichtendes Dichtungselement, vorzugsweise in Form einer Dichtmanschette (A11), gehalten ist, so daß äußerer (61.1) und innerer (61.2) Haubenteil und auch die Schmelzlotverbindung (A10) normalerweise wasserfrei sind.

27. Verschlußeinrichtung nach Anspruch 26, **dadurch gekennzeichnet,** daß das Dichtungselement, insbesondere die Dichtmanschette (All), von einem zentrischen Schaft (68) gehalten ist, welcher seinerseits in einer unteren Bodenwand (61.3) des äußeren Haubenteils (61.1) verankert ist.

28. Verschlußeinrichtung nach einem der Ansprüche 23 bis 27,
**dadurch gekennzeichnet,** daß der Außenumfang des haubenartigen Verschlußorgans (61) mit Heizrippen (69) versehen ist.

29. Verschlußeinrichtung nach Anspruch 23,
**dadurch gekennzeichnet**, daß der äußere Haubenteil (61.1) in den inneren Haubenteil (61.2) ragt und mit seiner Bodenwand (61.3) einen eine konische Mündung der Verbindungsleitung (5) abdichtenden, nicht selbsthemmenden Dichtkegel (A12) in Dichtposition hält, auf welchem die Wassersäule der Verbindungsleitung (5) lastet, so daß bei Aufschmelzen der Schmelzlotverbindung (A10) aufgrund einer Hitzeeinwirkung durch die Schmelze (3) der äußere Haubenteil (61.1) abfällt und der Dichtkegel (A12) von der Wassersäule herausgedrückt wird.

## Claims

1. Closing device opening in a temperature-dependent manner at a connecting line (5) for cooling fluid (6), for initiating the cooling for a core melt (3) in a nuclear reactor installation,
- with the connecting line (5) projecting on the outlet side into a collecting chamber (1) for the core melt (3) and being connected on the inlet side to a cooling-fluid reservoir (9), in particular a cooling-water reservoir,
- having a closing part (7) arranged on the outlet-side end (5.1) of the connecting line (5), which closing part normally closes the outlet-side end (5.1) in a sealing manner and has a temperature-dependent opening element (A1-A3) which, with thermal action of the core melt (3), initiates the release of at least one part of the outlet cross section of the connecting line (5) so that the cooling fluid (6) is conducted out of the cooling-fluid reservoir (9) by way of the connecting line (5) into the collecting chamber (1),
characterized in that the closing part (7) has as opening element a plastic block (A1) or a plastic plate (A2) which can be melted open or a plastic pipe (A3) which can be melted open and which is closed at its free end, which are largely corrosion-resistant and are normally thermally insulating with respect to the cooling fluid (6).

2. Closing device according to claim 1, characterized in that the plastic block (A1) is supported in a sealing manner by a sealing flange (8) against a pipe flange (10) at the outlet-side end (5.1) of the connecting line (5).

3. Closing device according to claim 2, characterized in that the plastic block (A1) is supported in its sealing position by means of at least one tension element (11) anchored to the pipe flange (10), with the tension element (11) engaging a pressure part (12), which for its part engages an end surface of the plastic block (Al) which is directed away from the sealing flange (8).

4. Closing device according to claim 3, characterized in that the tension element (11) is constructed as a steel frame which is connected at its one end to a flange ring (13) and can be braced by means of this flange ring (13) on the pipe flange (10) of the connecting line (5) and is connected at its other end to the pressure part (12).

5. Closing device according to claim 1, characterized in that the plastic plate (A2) which can be melted open can be braced in a sealing manner against a sealing surface (17) in the opening edge region of the connecting line (5).

6. Closing device according to claim 5, characterized in that the sealing surface (17) is formed by a pipe flange (15) arranged on the outlet-side end of the connecting line (5), and the plastic plate (A2) is surrounded at its edge region by a counterflange (16) and can be pressed in a sealing manner by the counterflange (16), which can be braced on the pipe flange (15), against the sealing surface (17).

7. Closing device according to claim 1, characterized in that the plastic pipe (A3) which can be melted open and which is closed at its free end is flange-connected in a sealing manner to the outlet-side end (5.1) of the connecting line (5).

8. Closing device according to claim 7, characterized in that the connecting line (5) and the flange-connected plastic pipe (A3) are formed as a respective pipe elbow with a pipe bend (R1, R2) extending downwards or upwards from the horizontal, so that an approximately S-shaped line end portion (L) is formed with a plastic pipe part (22) coming to an end approximately horizontally in the collecting chamber (1).

9. Closing device opening in a temperature-dependent manner at a connecting line (5) for cooling fluid (6), for initiating the cooling for a core melt (3) in a nuclear reactor installation,
- with the connecting line (5) projecting on the outlet side into a collecting chamber (1) for the core melt (3) and being connected on the inlet side to a cooling-fluid reservoir (9), in particular a cooling-water reservoir,
- having a closing part (7) arranged on the outlet-side end (5.1) of the connecting line (5), which closing part normally closes the outlet-side end (5.1) in a sealing manner and has a temperature-dependent opening element (A4-A7) which, with thermal action of the core melt (3), initiates the release of at least one part of the outlet cross section of the connecting line (5) so that the cooling fluid (6) is conducted out of the cooling-fluid reservoir (9) by way of the connecting line (5) into the collecting chamber (1),
characterized in that the closing part (7) has as opening element a sealing arrangement which has a predetermined breaking behaviour and comprises a sealing element (A4-A7) and associated holding means which are largely corrosion-resistant and normally thermally insulating with respect to the cooling fluid (6) and, with thermal action by the melt (3), caused by tearing, bursting or another type of destruction of the sealing arrangement, releases at least one part of the outlet cross section of the connecting line (5).

10. Closing device according to claim 9, characterized in that the closing part (7) has as opening element a bursting disc or a bursting membrane (A4) which can be braced in a sealing manner against a sealing surface (17) in the opening edge region of the connecting line (5) and which bursts under thermal action by the core melt (3).

11. Closing device according to claim 9 or 10, characterized by a glass plate (A2') as sealing and opening element.

12. Closing device according to claim 9 or 10, characterized by a metallic bursting membrane (A4) as sealing and opening element.

13. Closing device according to claim 12, characterized in that between the bursting membrane (A4) and a non-return flap (25), arranged at a point further upstream of the connecting line (5), a steam pressure chamber (26) is provided, wherein by means of thermal action the cooling water (6) used as cooling fluid evaporates in the steam pressure chamber (26) and the non-return flap (25) can be pressed by the steam pressure forces against its seat and, upon the exceeding of a steam pressure limit, the bursting membrane (A4) can be made to burst.

14. Closing device according to claim 9, characterized in that the closing part (7) has as sealing element a sealing flap (A5) with an expansion bolt fastener (28) used as opening element, wherein the expansion bolt (29) has a bolt breaking point (27) formed by cross sectional reduction, which bolt breaking point breaks at a limiting value of the expansion bolt elongation, which is conditional upon temperature, and releases the sealing flap (A5) for opening.

15. Closing device according to claim 14, characterized in that the expansion bolt (29) which holds together the sealing flap (A5) and its flap seat formed by the pipe flange (15) is exposed to the temperature-dependent tensile forces of a thermal expansion cartridge (30).

16. Closing device according to claim 15, characterized in that the expansion bolt (29) penetrates the thermal expansion cartridge (30) with an expansion length, and the thermal expansion cartridge (30) is provided at its outer circumference with heating ribs (31).

17. Closing device according to claim 9, characterized in that as sealing element of the closing part (7) there is a sealing flap (A6) with bolt fastener, wherein the opening element is a bolt (41) which is designed as a corrosion-resistant fusible bolt with a melting temperature above 600° and which, with thermal action, reaches through the core melt (3) and is finally destroyed and in this way releases the sealing flap (A6) for opening.

18. Closing device according to claim 11, characterized in that a glass plate (A7) is edged by a rubber cuff seal (44) and in that a thermal bursting disc (43) is braced in a sealing manner against the glass plate (A7) with a supporting and at the same time low-temperature-insulating relationship, for example by means of the pipe flange (15) and counterflange (16), so that when the thermal bursting disc (43) is destroyed due to the melt heat, the glass plate (A7) which is no longer supported can be destroyed by the static water pressure at the outlet-side end of the connecting line (5).

19. Closing device opening in a temperature-dependent manner at a connecting line (5) for cooling fluid (6), for initiating the cooling for a core melt (3) in a nuclear reactor installation,
- with the connecting line (5) projecting on the outlet side into a collecting chamber (1) for the core melt (3) and being connected on the inlet side to a cooling-fluid reservoir (9), in particular a cooling-water reservoir,
- having a closing part (7) arranged on the outlet-side end (5.1) of the connecting line (5), which closing part normally closes the outlet-side end (5.1) in a sealing manner and has a temperature-dependent opening element (A8-A9) which, with thermal action of the core melt (3), initiates the release of at least one part of the outlet cross section of the connecting line (5) so that the cooling fluid (6) is conducted out of the cooling-fluid reservoir (9) by way of the connecting line (5) into the collecting chamber (1),
characterized in that the closing part (7) has an opening element which is largely corrosion-resistant and normally thermally insulating with respect to the cooling fluid (6) and is stored in the auxiliary energy, by means of which it can be brought into the opening position with the thermal action of the melt (3).

20. Closing device according to claim 19, characterized in that the closing part (7) is a valve (56), the closing piece (A8) of which, which is used as a sealing element, is coupled to a control piston (49), the one side of which is engaged by the force of a tensioned valve opening spring (51), and the other side of which is engaged by a counterforce resulting from a fluidic control pressure, the counterforce also holding the closing piece (A8) in its closing position, wherein a self-contained fluidic control line system (54) for the control pressure comprises at least one sensor body (55) arranged in the floor region of the collecting chamber (1), which sensor body, under the thermal action of the melt, opens the control line system (54) and decreases the fluidic control pressure, whereby the closing piece (A8) is moved by the valve opening spring (51) into its opening position.

21. Closing device according to claim 20, characterized in that a hollow sensor body (55) has a desired melting-open point.

22. Closing device according to claim 19, having a cooling water reservoir (9), characterized in that the sealing element is a sealing cuff (A9) which is self-sealing under water pressure and which conforms to the inner circumference of the opening (57) of the connecting line (5) and which is supported in its sealing position by a thermite melt packing (58) fastened to the line opening, with an ignition cord (59) being laid from an igniter (60) arranged in the floor region of the collecting chamber (1) to the thermite melt packing (58) arranged with clearance above the igniter (60), so that after the ignition of the igniter (60) by the heat of the melt (3) and the destruction of the thermite melt packing (58) initiated thereby, the cuff is pressed out by the water pressure prevailing in the opening region of the connecting line (5).

23. Closing device according to claim 9, characterized by a hood-like closing part (61) arranged at the outlet-side end of the connecting line, which closing part is divided by at least one circumferential fusible solder connection (A10), which is used as an opening element and consists of a corrosion-resistant silver solder, into an outer hood part (61.1) and an inner hood part (61.2), wherein, when the fusible solder connection (A10) melts open, due to a thermal action by the melt (3), the outer hood part (61.1) falls away and releases the outlet cross section of the outlet-side end (5.1) of the connecting line (5).

24. Closing device according to claim 23, characterized in that the hood-like closing part (61) surrounds an extension of the connecting line (5) with an annular gap (63) and extends up to a hood flange connection (61.4, 15) at the connecting line (5), in that the annular gap (63) which is sealed to the outside communicates with the water column in the connecting line (5) and on a part (64) of its length is provided with an air cushion chamber (65) connected to the water column, and in that the fusible solder connection (A10) is arranged in the region of the air cushion chamber (65).

25. Closing device according to claim 23 or 24, characterized in that the hood-like closing part (61) is surrounded by a shield-like thermal radiation reflector (66), in the focal point zone of which the fusible solder connection (A10) is located.

26. Closing device according to claim 23, characterized in that the outer hood part (61.1) supports a sealing element which seals the opening (57) of the connecting line (5) and which is preferably in the form of a sealing cuff (All), so that the outer hood part (61.1) and the inner hood part (61.2) and also the fusible solder connection (A10) are normally free of water.

27. Closing device according to claim 26, characterized in that the sealing element, in particular the sealing cuff (All), is supported by a central shaft (68) which for its part is anchored in a lower base (61.3) of the outer hood part (61.1).

28. Closing device according to one of claims 23 to 27, characterized in that the outer circumference of the hood-like closing part (61) is provided with heating ribs (69).

29. Closing device according to claim 23, characterized in that the outer hood part (61.1) projects into the inner hood part (61.2) and with its base (61.3) holds a sealing cone (A12) in the sealing position, the sealing cone sealing a conical opening of the connecting line (5) and not being self-locking, on which sealing cone the water column of the connecting line (5) weighs, so that when the fusible solder connection (A10) melts open due to a thermal action by the melt (3) the outer hood part (61.1) falls away and the sealing cone (A12) is pressed out by the water column.

## Revendications

1. Système de fermeture dont l'ouverture dépend de la température, au niveau d'une conduite de raccordement (5) d'un fluide réfrigérant (6), permettant le lancement du processus de refroidissement de la matière en fusion (3) du coeur d'un réacteur nucléaire,
- la conduite de raccordement (5) s'avançant, côté sortie, dans un espace collecteur (1) de la matière en fusion (3) du coeur et étant raccordée, côté entrée, à un réservoir de fluide réfrigérant (9), en particulier un réservoir d'eau de refroidissement,
- comprenant un organe de fermeture (7) disposé sur l'extrémité (5.1), côté sortie, de la conduite de raccordement (5), qui dans des conditions normales assure la fermeture étanche de l'extrémité (5.1) côté sortie et qui comporte un élément d'ouverture (A1-A3) dépendant de la température, lequel, en cas d'effet de chaleur de la matière en fusion (3) du coeur, déclenche le déblocage d'une partie au moins de la section de sortie de la conduite de raccordement (5), de manière à véhiculer le fluide réfrigérant (6) depuis le réservoir de fluide réfrigérant (9), via la conduite de raccordement (5), dans l'espace collecteur (1),
caractérisé en ce que l'organe de fermeture (7) comporte comme élément d'ouverture un bloc en plastique (A1) ou une plaque en plastique fusible (A2) ou un tube en plastique fusible (A3) fermé au niveau de son extrémité libre, qui sont largement résistants à la corrosion et, dans des conditions normales, isolants thermiquement par rapport au fluide réfrigérant (6).

2. Système de fermeture selon la revendication 1, caractérisé en ce que le bloc en plastique (A1) est maintenu de manière étanche, à l'aide d'une bride d'étanchéité (8), contre une bride de tuyau (10) à l'extrémité (5.1), côté sortie, de la conduite de raccordement (5).

3. Système de fermeture selon la revendication 2, caractérisé en ce que le bloc en plastique (A1) est maintenu dans sa position étanche au moyen d'au moins un élément de traction (11) ancré au niveau de la bride de tuyau (10), l'élément de traction (11) étant relié à un organe de pression (12), lequel est relié de son côté à une face frontale du bloc plastique (A1), opposée à la bride d'étanchéité (8).

4. Système de fermeture selon la revendication 3, caractérisé en ce que l'élément de traction (11) est réalisé sous forme d'un cadre en acier relié à l'une de ses extrémités à un collet rapporté (13) et pouvant être serré sous contrainte, au moyen de ce collet rapporté (13), contre la bride de tuyau (10) de la conduite de raccordement (5), et qui est relié à son autre extrémité à l'organe de pression (12).

5. Système de fermeture selon la revendication 1, caractérisé en ce que la plaque en plastique fusible (A2) peut être serrée sous contrainte, de manière étanche, contre une surface étanche (17) à la périphérie de l'embouchure de la conduite de raccordement (5).

6. Système de fermeture selon la revendication 5, caractérisé en ce que la surface étanche (17) est formée par une bride de tuyau (15) disposée à l'extrémité, côté sortie, de la conduite de raccordement (5) et en ce que la plaque en plastique (A2), à sa périphérie, est entourée par une contre-bride (16) et peut être serrée de manière étanche, grâce à ladite contre-bride (16) pouvant elle être serrée sous contrainte contre la bride de tuyau (15), contre la surface étanche (17).

7. Système de fermeture selon la revendication 1, caractérisé en ce que le tube en plastique fusible (A3), fermé au niveau de son extrémité libre, est raccordé par bride, de manière étanche, à l'extrémité (5.1), côté sortie, de la conduite de raccordement (5).

8. Système de fermeture selon la revendication 7, caractérisé en ce que la conduite de raccordement (5) et le tube en plastique (A3) raccordé par bride sont réalisés chacun sous forme de tube coudé pourvu d'un coude (R1, R2) s'étendant à partir de l'horizontale respectivement vers le bas et vers le haut, de manière à former une extrémité de conduite (L) sensiblement en forme de S avec une partie de tube plastique (22) débouchant sensiblement horizontalement dans l'espace collecteur (1).

9. Système de fermeture dont l'ouverture dépend de la température, au niveau d'une conduite de raccordement (5) d'un fluide réfrigérant (6), permettant le lancement du processus de refroidissement de la matière en fusion (3) du coeur d'un réacteur nucléaire,
- la conduite de raccordement (5) s'avançant, côté sortie, dans un espace collecteur (1) de la matière en fusion (3) du coeur et étant raccordée, côté entrée, à un réservoir de fluide réfrigérant (9), en particulier un réservoir d'eau de refroidissement,
- comprenant un organe de fermeture (7) disposé sur l'extrémité (5.1), côté sortie, de la conduite de raccordement (5), qui, dans des conditions normales, assure la fermeture étanche de l'extrémité (5.1) côté sortie et qui comporte un élément d'ouverture (A4-A7) dépendant de la température, lequel, en cas d'effet de chaleur de la matière en fusion (3) du coeur, déclenche le déblocage d'une partie au moins de la section de sortie de la conduite de raccordement (5), de manière à véhiculer le fluide réfrigérant (6) depuis le réservoir de fluide réfrigérant (9), via la conduite de raccordement (5), dans l'espace collecteur (1),
caractérisé en ce que l'organe de fermeture (7) comporte comme élément d'ouverture un dispositif d'étanchéité présentant un comportement destiné à la rupture, composé d'un élément d'étanchéité (A4-A7) et de moyens de maintien associés, qui est largement résistant à la corrosion et, dans des conditions normales, isolant thermiquement par rapport au fluide réfrigérant (6) et qui, en cas d'effet de chaleur de la matière en fusion (3), en raison d'un déchirement, d'une rupture ou de toute autre destruction du dispositif d'étanchéité, libère au moins une partie de la section de sortie de la conduite de raccordement (5).

10. Système de fermeture selon la revendication 9, caractérisé en ce que l'organe de fermeture (7) comporte comme élément d'ouverture un disque de rupture ou une membrane de rupture (A4) qui peut être serrée sous contrainte, de manière étanche, contre une surface étanche (17) à la périphérie de l'embouchure de la conduite de raccordement (5) et qui rompt sous l'effet de la chaleur de la matière en fusion (3) du coeur.

11. Système de fermeture selon la revendication 9 ou 10, caractérisé par une plaque de verre (A2') comme élément d'étanchéité et d'ouverture.

12. Système de fermeture selon la revendication 9 ou 10, caractérisé par une membrane de rupture (A4) métallique comme élément d'étanchéité et d'ouverture.

13. Système de fermeture selon la revendication 12, caractérisé en ce qu'un espace à pression de vapeur (26) est prévu entre la membrane de rupture (A4) et un clapet de non-retour (25) disposé à un endroit plus en amont de la conduite de raccordement (5), l'eau de refroidissement (6) utilisée comme fluide réfrigérant s'évaporant dans l'espace à pression de vapeur (26) sous l'effet de la chaleur et le clapet de non-retour (25) pouvant être pressé contre son siège grâce aux forces de la pression de vapeur et la membrane de rupture (A4) pouvant rompre lorsqu'une pression de vapeur limite est dépassée.

14. Système de fermeture selon la revendication 9, caractérisé en ce que l'organe de fermeture (7) comporte comme élément d'étanchéité un clapet d'étanchéité (A5) pourvu d'un dispositif de contrainte à cheville élastique (28) servant d'élément d'ouverture, la cheville élastique (29) comprenant un point de rupture (27) de la cheville, obtenu par une réduction de la section, qui rompt lorsqu'un seuil de l'allongement de la cheville dû à la température est atteint et libère le clapet d'étanchéité (A5) pour l'ouverture.

15. Système de fermeture selon la revendication 14, caractérisé en ce que la cheville élastique (29) maintenant solidaires le clapet d'étanchéité (A5) et son siège formé par la bride de tuyau (15) est soumise aux forces de traction dépendantes de la température d'une cartouche élastique thermoélectrique (30).

16. Système de fermeture selon la revendication 15, caractérisé en ce que la cheville élastique (29) traverse la cartouche élastique thermoélectrique (30) avec une certaine longueur d'allongement et en ce que la cartouche élastique thermoélectrique (30) est pourvue de nervures chauffantes (31) sur son contour externe.

17. Système de fermeture selon la revendication 9, caractérisé en ce que l'organe de fermeture (7) comporte comme élément d'étanchéité un clapet d'étanchéité (A6) pourvu d'un dispositif de contrainte à cheville, l'élément d'ouverture étant une cheville (41) réalisée sous forme de cheville fusible résistante à la corrosion, avec une température de fusion au-delà de 600°C, qui, en cas d'effet de chaleur de la matière en fusion (3) du coeur, s'allonge et enfin se détruit et libère ainsi le clapet d'étanchéité (A6) pour l'ouverture.

18. Système de fermeture selon la revendication 11, caractérisé en ce qu'une plaque de verre (A7) est entourée d'une manchette d'étanchéité en caoutchouc (44) et en ce qu'un disque de rupture thermique (43) servant à la fois de support et d'isolation thermique pour basses températures est serré sous contrainte, de manière étanche, contre la plaque de verre (A7), p.ex. par bride (15) et contre-bride (16), de sorte qu'à la destruction du disque de rupture thermique (43) en raison de la chaleur de la matière en fusion, la plaque de verre (A7), à défaut de support, peut être détruite par la pression hydrostatique à l'extrémité côté sortie de la conduite de raccordement (5).

19. Système de fermeture dont l'ouverture dépend de la température, au niveau d'une conduite de raccordement (5) d'un fluide réfrigérant (6), permettant le lancement du processus de refroidissement de la matière en fusion (3) du coeur d'un réacteur nucléaire,
- la conduite de raccordement (5) s'avançant, côté sortie, dans un espace collecteur (1) de la matière en fusion (3) du coeur et étant raccordée, côté entrée, à un réservoir de fluide réfrigérant (9), en particulier un réservoir d'eau de refroidissement,
- comprenant un organe de fermeture (7) disposé sur l'extrémité (5.1), côté sortie, de la conduite de raccordement (5), qui, dans des conditions normales, assure la fermeture étanche de l'extrémité (5.1) côté sortie et qui comporte un élément d'ouverture (A8-A9) dépendant de la température, lequel, en cas d'effet de chaleur de la matière en fusion (3) du coeur, déclenche le déblocage d'une partie au moins de la section de sortie de la conduite de raccordement (5), de manière à véhiculer le fluide réfrigérant (6) depuis le réservoir de fluide réfrigérant (9), via la conduite de raccordement (5), dans l'espace collecteur (1),
caractérisé en ce que l'organe de fermeture (7) comporte un élément d'ouverture qui est largement résistant à la corrosion et, dans des conditions normales, isolant thermiquement par rapport au fluide réfrigérant (6), et dans lequel est emmagasinée de l'énergie auxiliaire permettant de l'amener en position d'ouverture en cas d'effet de chaleur de la matière en fusion (3).

20. Système de fermeture selon la revendication 19, caractérisé en ce que l'organe de fermeture (7) est une soupape (56) dont l'obturateur (A8) servant d'élément d'étanchéité est couplé avec un piston distributeur (49) dont l'un des côtés est soumis à la force d'un ressort tendu (51) d'ouverture de soupape et l'autre côté à une force antagoniste résultant d'une pression de distribution fluidique, et qui maintient l'obturateur (A8) dans sa position fermée, un circuit de distribution (54) fluidique entièrement fermé de la pression de distribution comportant au moins un corps de capteur (55) disposé au niveau du fond du compartiment collecteur (1), qui sous l'effet de la chaleur de la matière en fusion ouvre le circuit de distribution (54) et supprime la pression de distribution fluidique, de sorte que l'obturateur (A8) est amené dans sa position ouverte par le ressort d'ouverture de soupape (51).

21. Système de fermeture selon la revendication 20, caractérisé en ce qu'un corps de capteur (55) creux comporte un point destiné à la fusion.

22. Système de fermeture selon la revendication 19, pourvu d'un réservoir d'eau de refroidissement (9), caractérisé en ce que l'élément d'étanchéité est une manchette d'étanchéité (A9) auto-étanchéifiante sous pression hydraulique, qui épouse le contour interne de l'embouchure (57) de la conduite de raccordement (5) et qui est maintenue dans sa position étanche par une garniture fusible à la thermite (58) fixée à l'embouchure de la conduite, une mèche (59) étant posée entre une amorce (60) disposée au niveau du fond du compartiment collecteur (1) et la garniture fusible à la thermite (58) disposée à distance au-dessus de l'amorce (60), de sorte qu'après amorçage de l'amorce (60) par la chaleur de la matière en fusion (3) et destruction de la garniture fusible à la thermite (58) ainsi déclenchée, la manchette est expulsée par la pression hydraulique régnant au niveau de l'embouchure de la conduite de raccordement (5).

23. Système de fermeture selon la revendication 9, caractérisé par un organe de fermeture (61) en forme de cloche disposé à l'extrémité, côté sortie, de la conduite de raccordement, qui par au moins une jonction brasée fusible continue (A10) en un argent de brasage résistant à la corrosion, servant d'élément d'ouverture, est divisé en une partie de cloche extérieure (61.1) et une partie de cloche intérieure (61.2), la partie de cloche extérieure (61.1) tombant à la fusion de la jonction brasée fusible (A10) en raison d'un effet de chaleur de la matière en fusion (3) et libérant la section de l'extrémité (5.1), côté sortie, de la conduite de raccordement (5).

24. Système de fermeture selon la revendication 23, caractérisé en ce que l'organe de fermeture (61) en forme de cloche entoure un prolongement de la conduite de raccordement (5) en formant un passage annulaire (63) et s'étend jusqu'à une jonction cloche/bride (61.4, 15) sur la conduite de raccordement (5), en ce que le passage annulaire (63) étanche vers l'extérieur communique avec la colonne d'eau dans la conduite de raccordement (5) et comporte sur une partie (64) de sa longueur un espace à matelas d'air (65) à la suite de la colonne d'eau et en ce que la jonction brasée fusible (A10) est disposée dans la partie de l'espace à matelas d'air (65).

25. Système de fermeture selon la revendication 23 ou 24, caractérisé en ce que l'organe de fermeture (61) en forme de cloche est entouré d'un réflecteur à rayonnement thermique (66) en forme de parapluie, dans la zone du foyer duquel se trouve la jonction brasée fusible (A10).

26. Système de fermeture selon la revendication 23, caractérisé en ce qu'un élément d'étanchéité, de préférence en forme de manchette d'étanchéité (A11), obturant de manière étanche l'embouchure (57) de la conduite de raccordement (5), est maintenu par la partie de cloche extérieure (61.1), de sorte que les parties de cloche extérieure (61.1) et intérieure (61.2) de même que la jonction brasée fusible (A10) ne sont pas en contact avec l'eau dans des conditions normales.

27. Système de fermeture selon la revendication 26, caractérisé en ce que l'élément d'étanchéité, en particulier la manchette d'étanchéité (A11), est maintenue par un fût centré (68), lequel est ancré de son côté dans une paroi de fond inférieure (61.3) de la partie de cloche extérieure (61.1).

28. Système de fermeture selon l'une des revendications 23 à 27, caractérisé en ce que le contour externe de l'organe de fermeture (61) en forme de cloche est pourvu de nervures chauffantes (69).

29. Système de fermeture selon la revendication 23, caractérisé en ce que la partie de cloche extérieure (61.1) s'avance dans la partie de cloche intérieure (61.2), maintenant en position étanche, par sa paroi de fond (61.3), un cône d'étanchéité (A12) non autobloquant assurant l'étanchéité d'une embouchure conique de la conduite de raccordement (5), sur lequel pèse la colonne d'eau de la conduite de raccordement (5), de sorte qu'à la fusion de la jonction brasée fusible (A10), en raison d'un effet de chaleur de la matière en fusion (3), la partie de cloche extérieure (61.1) tombe et le cône d'étanchéité (A12) est expulsé par la colonne d'eau.
